(19) Europäisches Patentamt
European Patent Office
Office européen des brevets

(11) EP 2 200 435 B1

(12) # EUROPÄISCHE PATENTSCHRIFT

(45) Veröffentlichungstag und Bekanntmachung des Hinweises auf die Patenterteilung:
**28.11.2012 Patentblatt 2012/48**

(21) Anmeldenummer: **08801701.7**

(22) Anmeldetag: **26.08.2008**

(51) Int Cl.:
***A01N 41/10*** *(2006.01)* ***A01N 43/40*** *(2006.01)*
***A01N 43/60*** *(2006.01)* ***A01N 43/78*** *(2006.01)*

(86) Internationale Anmeldenummer:
**PCT/EP2008/006970**

(87) Internationale Veröffentlichungsnummer:
**WO 2009/030399 (12.03.2009 Gazette 2009/11)**

(54) **WIRKSTOFFKOMBINATIONEN MIT INSEKTIZIDEN UND AKARIZIDEN EINGENSCHAFTEN**

ACTIVE INGREDIENT COMBINATIONS HAVING INSECTICIDAL AND ACARICIDAL PROPERTIES

COMBINAISONS DE PRINCIPES ACTIFS AYANT DES PROPRIÉTÉS INSECTICIDES ET ACARICIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.09.2007 EP 07115755**

(43) Veröffentlichungstag der Anmeldung:
**30.06.2010 Patentblatt 2010/26**

(73) Patentinhaber: **Bayer CropScience AG**
**40789 Monheim (DE)**

(72) Erfinder:
- **HUNGENBERG, Heike**
**40764 Langenfeld (DE)**
- **JESCHKE, Peter**
**51467 Bergisch Gladbach (DE)**
- **VELTEN, Robert**
**40764 Langenfeld (DE)**
- **FISCHER, Rüdiger**
**50259 Pulheim (DE)**
- **THIELERT, Wolfgang**
**51519 Odenthal (DE)**

(56) Entgegenhaltungen:
**EP-A- 0 539 588**
**DE-A1-102004 047 922**
**DE-A1-102006 014 482**
**JP-A- 5 004 966**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft neue Wirkstoffkombinationen, die mindestens eine bekannte Verbindung der Formel (I) in welcher

A für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl steht und

$R^1$ für Methyl, Cyclopropyl, Methoxy, 2-Fluorethyl oder 2,2-Difluor-ethyl steht,

einerseits und mindestens einen weiteren bekannten Wirkstoff aus der Klasse der Phthalsäurediamide andererseits enthalten und sehr gut zur Bekämpfung von tierischen Schädlingen wie Insekten und unerwünschten Akariden geeignet sind. Die Erfindung betrifft auch Verfahren zur Bekämpfung tierischer Schädlinge auf Pflanzen und Saatgut, die Verwendung der erfindungsgemäßen Wirkstoffkombinationen zur Behandlung von Saatgut, ein Verfahren zum Schutz von Saatgut und nicht zuletzt das mit den erfindungsgemäßen Wirkstoffkombinationen behandelte Saatgut.

Es ist bereits bekannt, dass Verbindungen der Formel (I)

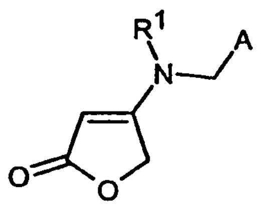

(I),

in welcher

A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder

A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, $C_1$-$C_4$-Alkyl (welches gegebenenfalls durch Fluor und/oder Chlor substituiert ist), $C_1$-$C_3$-Alkylthio (welches gegebenenfalls durch Fluor und/oder Chlor substituiert ist), oder $C_1$-$C_3$-Alkylsulfonyl (welches gegebenenfalls durch Fluor und/oder Chlor substituiert ist), substituiert ist,

oder

A für einen Rest

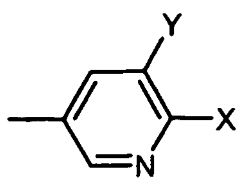

steht,
in welchem

X für Halogen, Alkyl oder Halogenalkyl steht

Y für Halogen, Alkyl, Halogenalkyl, Halogenalkoxy, Azido oder Cyan steht und

R für Alkyl, Halogenalkyl, Alkenyl, Halogenalkenyl, Alkinyl, Cycloalkyl, Cycloalkylalkyl, Halogencycloalkyl, Alkoxy,

Alkoxyalkyl, oder Halogencycloalkylalkyl steht,

insektizide Wirkung aufweisen (vgl. EP 0 539 588, WO 2007/115644, WO 2007/115643, WO 2007/115646.

Aus EP-A-1 006 107 ist bekannt, dass verschiedene Verbindungen aus der Klasse der Phthalsäurediamide, wie beispielsweise Flubendiamide, als Insektizide in Bereich des Pflanzenschutzes verwendet werden können. Die insektizide Wirkung verschiedener optisch aktiver Phthalsäurediamidverbindungen ist in EP-A-1 782 689 beschrieben.

Die Wirkung der insektiziden Verbindung der Formel (I) beziehungsweise der Verbindung aus der Klasse der Phthalsäurediamide ist im Allgemeinen gut. Insbesondere bei niedrigen Aufwandmengen und bei bestimmten Schädlingen befriedigen sie jedoch nicht immer die Bedürfnisse der landwirtschaftlichen Praxis, und es besteht immer noch ein Bedarf an einer ökonomisch effizienten und ökologisch sicheren Schädlingsbekämpfung.

Weitere an insektizide Verbindungen gestellte Ansprüche schließen die Absenkung der Dosierungsmenge; eine wesentliche Verbreiterung des Spektrums zu bekämpfender Schädlinge einschließlich resistenter Schädlinge; eine erhöhte Anwendungssicherheit; eine verminderte Toxizität gegenüber Pflanzen und somit eine bessere Pflanzenverträglichkeit; die Bekämpfung der Schädlinge in ihren verschiedenen Entwicklungsstadien; ein besseres Verhalten während der Herstellung der insektiziden Verbindungen, zum Beispiel während des Vermahlens oder Mischens, während ihrer Lagerung oder während ihrer Anwendung; ein sehr vorteilhaftes biozides Spektrum selbst bei niedrigen Konzentrationen mit damit einhergehender guter Verträglichkeit durch Warmblüter, Fische und Pflanzen; und das Erzielen einer zusätzlichen Wirkung, zum Beispiel einer algiziden, anthelmintischen, aviziden, bakteriziden, fungiziden, mollustiziden, nematiziden, pflanzenaktivierenden, rodentiziden oder viruziden Wirkung.

Weitere spezifische Anforderungen an bei vegetativem und generativem Pflanzenvermehrungsmaterial verwendete insektizide Verbindungen schließen eine vernachlässigbare Phytotoxizität bei der Anwendung auf dem Saatgut und Pflanzenvermehrungsmaterial, eine Verträglichkeit mit Bodenbedingungen (z.B. was die Bindung der Verbindung an den Boden betrifft), eine systemische Wirkung in der Pflanze, keinen negativen Einfluss auf die Keimung und eine Wirksamkeit während des Lebenszyklus des entsprechenden Schädlings ein.

Aufgabe der Erfindung ist die Befriedigung eines oder mehrerer der oben erwähnten Ansprüche wie z.B. die Absenkung der Dosierungsmenge, eine Verbreiterung des bekämpfbaren Spektrums an Schädlungen einschließlich resistenter Schädlinge, und insbesondere die speziellen Anforderungen zur Anwendbarkeit auf vegetativem und generativem Pflanzenvermehrungsmaterial. Es wurde nun gefunden, dass erfindungsgemäße Kombinationen von mindestens einer erfindungsgemäßes Verbindung der Formel (I) in welcher

A für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl steht und

$R^1$ für Methyl, Cyclopropyl, Methoxy, 2-Fluorethyl oder 2,2-Difluor-ethyl steht,

und mindestens einer Phthalsäurediamidverbindung ausgewählt unter Flubendiamide oder einem optisch aktiven Phthalsäurediamid, nämlich (*S*)-3-Iod-N'-{2-methyl-4-[1,2,2,2-tetrafluor-1-(trifluormethyl)ethyl]phenyl}-$N^2$-(1-methyl-2-methylsulfonylethyl)phthalamid mit der Formel (IIa), (*S*)-3-Chlor-$N^1$-{2-methyl-4-[1,2,2,2-tetrafluor-1-(trifluormethyl)ethyl] phenyl}-$N^2$-(1-methyl-2-methylsulfonylethyl)phthalamid mit der Formel (IIb), (*S*)-3-Brom-$N^1$-{2-methyl-4-[1,2,2,2-tetrafluor-1-(trifluormethyl)ethyl]phenyl}-$N^2$-(1-methyl-2-methylsulfonylethyl)phthalamid mit der Formel (IIc)

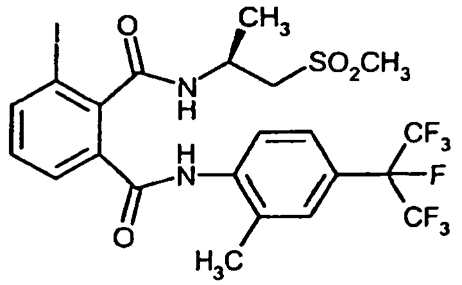

(IIa)

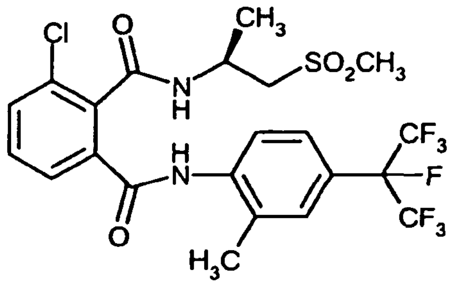

(IIb)

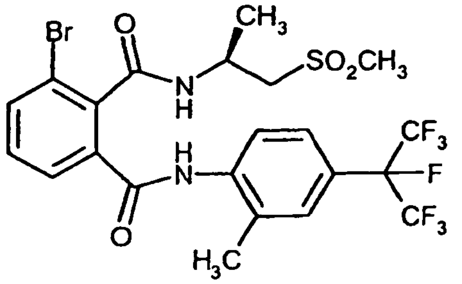

(IIc)

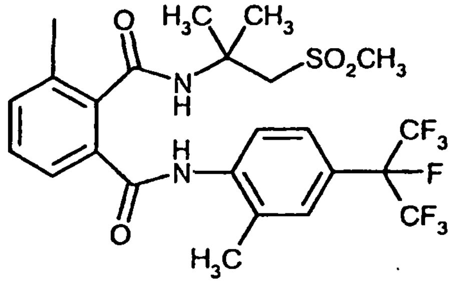

Flubendiamide

mit der Maßgabe, dass Wirkstoffkombinationen enthaltend Flubendiamide und 4-{[(6-Chlorpyrid-3-yl)methyl](methyl) amino}furan-2(5H)-on oder 4-{[(6-Chlorpyrid-3-yl)methyl] (cyclopropyl)amino}furan-2(5H)-on ausgeschlossen sind, synergistisch wirksam sind und sich zur Bekämpfung tierischer Schädlinge eignen. Überraschenderweise ist die insektizide und akarizide Wirkung der erfindungsgemäßen Wirkstoffkombinationen wesentlich höher als die Summe der Wirkungen der einzelnen Wirkstoffe. Es liegt ein nicht vorhersehbarer echter synergistischer Effekt vor und nicht nur eine Wirkungsergänzung.

Die synergistische Wirkung der erfindungsgemäßen Wirkstoffkombinationen einer Verbindung der Formel (I) und der Verbindung aus der Klasse der Phthalsäurediamide erweitert den Wirkungsbereich der erfindungsgemäßen Verbindung der Formel (I) und der Verbindung aus der Klasse der Phthalsäurediamide primär durch eine Verminderung der Dosierungsmenge und durch eine Erweiterung des Spektrums an bekämpfbaren Schädlingen. So lässt sich mit den erfindungsgemäßen Wirkstoffkombinationen einer erfindungsgemäßen Verbindung der Formel (I) und einer Verbindung aus der Klasse der Phthalsäurediamide immer noch ein hoher Grad an Schädlingsbekämpfung erzielen, selbst in Fällen, bei denen die einzelnen Verbindungen der erfindungsgemäßen Wirkstoffkombinationen bei den niedrigen angewendeten Aufwandmengen keine ausreichende Wirkung zeigen.

Zusätzlich zu der oben beschriebenen synergistischen Wirkung können die erfindungsgemäßen Wirkstoffkombinationen noch weitere überraschende Vorteile zeigen, einschließlich einer erhöhten Anwendungssicherheit; einer verminderten Phytotoxizität und somit einer besseren Pflanzenverträglichkeit; der Bekämpfung von Schädlingen in ihren verschiedenen Entwicklungsstadien; eines besseren Verhaltens während der Herstellung der insektiziden Verbindungen, zum Beispiel während des Vermahlens oder des Mixens, während ihrer Lagerung oder während ihrer Anwendung; eines sehr vorteilhaften bioziden Spektrums selbst bei niedrigen Konzentrationen mit damit einhergehender guter Verträglichkeit durch Warmblüter, Fische und Pflanzen; und des Erzielens einer zusätzlichen Wirkung, zum Beispiel einer algiziden, anthelmintischen, aviziden, bakteriziden, fungiziden, molluskiziden, nematiziden, pflanzenaktivierenden, rodentiziden oder viruziden Wirkung.

Weiterhin wurde überraschenderweise gefunden, dass sich die erfindungsgemäßen Wirkstoffkombinationen besonders zum Schutz von Samen und/oder Sprösslingen und Blättern einer aus den Samen herangezogenen Pflanze gegen eine Schädigung durch Schädlinge eignet. Die erfindungsgemäßen Wirkstoffkombinationen zeigen somit eine vernachlässigbare Phytotoxizität bei der Anwendung auf das Pflanzenfortpflanzungsmaterial, eine Verträglichkeit mit Bodenbedingungen (z.B. was die Bindung der Verbindung an den Boden betrifft), eine systemische Wirkung in der Pflanze, keinen negativen Einfluss auf die Keimung und Wirksamkeit während des entsprechenden Schädlingslebenszyklus.

Die erfindungsgemäßen Wirkstoffkombinationen enthalten neben mindestens einer erfindungsgemäßen Verbindung der Formel (I) mindestens eine der oben einzeln aufgeführten Phthalsäurediamidverbindungen. Bevorzugt enthalten die erfindungsgemäßen Wirkstoffkombinationen genau eine erfindungsgemäßen Verbindung der Formel (I) und genau eine der oben einzeln aufgeführten Phthalsäurediamidverbindung. Weiterhin bevorzugt sind Wirkstoffkombinationen, die eine erfindungsgemäßen Verbindung der Formel (I) und zwei der oben einzeln aufgeführten Phthalsäurediamidverbindungen enthalten. Weiterhin bevorzugt sind Mischungen, die zwei erfindungsgemäßen Verbindungen der Formel (I) und eine der oben einzeln aufgeführten Phthalsäurediamidverbindungen enthalten.

Im Folgenden sind bevorzugte Untergruppen für die erfindungsgemäßen Verbindungen der in der oben erwähnten Formel (I) in den erfindungsgemäßen Wirkstoffkombinationen mit mindestens einer der oben einzeln aufgeführten Phthalsäurediamidverbindungen aufgeführt, mit der Maßgabe, dass Wirkstoffkombinationen enthaltend Flubendiamide und 4-{[(6-Chlorpyrid-3-yl)methyl](methyl)amino}furan-2(5H)-on oder 4-{[(6-Chlorpyrid-3-yl)methyl] (cyclopropyl)amino}furan-2(5H)-on ausgeschlossen sind.

A steht am meisten bevorzugt für den Rest 6-Chlor-pyrid-3-yl oder 5-Fluor-6-chlor-pyrid-3-yl.

$R^1$ steht am meisten bevorzugt für Methyl, 2-Fluorethyl oder 2,2-Difluor-ethyl.

In einer hervorgehobenen Gruppe von erfindungsgemäßen Verbindungen der Formel (I) steht A für 6-Chlorpyrid-3-yl

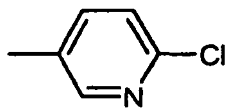

In einer weiteren hervorgehobenen Gruppe von erfindungsgemäßen Verbindungen der Formel (I) steht A für 6-Brom-pyrid-3-yl

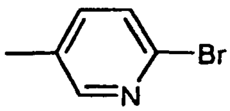

In einer weiteren hervorgehobenen Gruppe von erfindungsgemäßen Verbindungen der Formel (I) steht A für 2-Chlor-1,3-thiazol-5-yl-

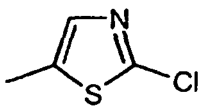

In einer weiteren hervorgehobenen Gruppe von erfindungsgemäßen Verbindungen der Formel (I) steht A für 5-Fluor-6-chlor-pyrid-3-yl,

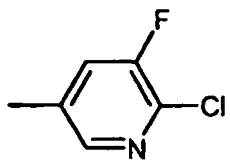

In einer weiteren hervorgehobenen Gruppe von erfindungsgemäßen Verbindungen der Formel (I) steht A für 5,6-Dichlor-pyrid-3-yl,

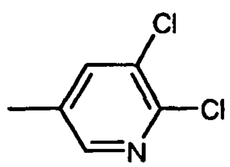

In einer weiteren hervorgehobenen Gruppe von erfindungsgemäßen Verbindungen der Formel (I) steht $R^1$ für Methyl.

In einer weiteren hervorgehobenen Gruppe von erfindungsgemäßen Verbindungen der Formel (I) steht $R^1$ für Cyclopropyl.

In einer weiteren hervorgehobenen Gruppe von erfindungsgemäßen Verbindungen der Formel (I) steht $R^1$ für 2-Fluorethyl.

In einer weiteren hervorgehobenen Gruppe von erfindungsgemäßen Verbindungen der Formel (I) steht $R^1$ für 2,2-Difluorethyl.

Die oben aufgeführten allgemeinen oder in Vorzugsbereiche aufgeführten Restedefinitionen bzw. Erläuterungen können untereinander, also auch zwischen den jeweiligen Vorzugsbereichen, beliebig kombiniert werden.

Im Einzelnen seien die folgende erfindungsgemäßen Verbindungen der allgemeinen Formel (I) genannt, mit der Maßgabe, dass Wirkstoffkombinationen enthaltend Flubendiamide und 4-{[(6-Chlorpyrid-3-yl)methyl](methyl)amino} furan-2(5H)-on oder 4-{[(6-Chlorpyrid-3-yl)methyl] (cyclopropyl)amino}furan-2(5H)-on ausgeschlossen sind:

- Verbindung (I-1), 4-{[(6-Brompyrid-3-yl)methyl)(2-fluorethyl)amino}furan-2(5H)-on, besitzt die Formel

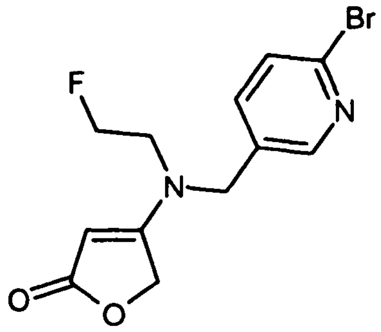

  und ist bekannt aus der internationalen Patentanmeldung WO 2007/115644.

- Verbindung (I-2), 4-{[(6-Fluorpyrid-3-yl)methyl](2,2-difluorethyl)amino}furan-2(5H)-on, besitzt die Formel

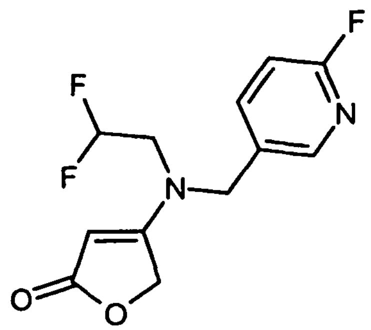

  und ist bekannt aus der internationalen Patentanmeldung WO 2007/115644.

- Verbindung (1-3), 4-{[(2-Chlor-1,3-thiazol-5-yl)methyl](2-fluorethyl)amino}furan-2(5H)-on, besitzt die Formel

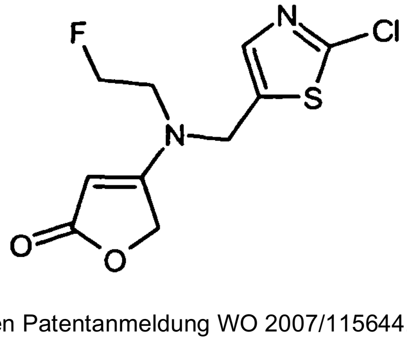

  und ist bekannt aus der internationalen Patentanmeldung WO 2007/115644.

- Verbindung (I-4), 4-{[(6-Chlorpyrid-3-yl)methyl](2-fluorethyl)amino}furan-2(5H)-on, besitzt die Formel

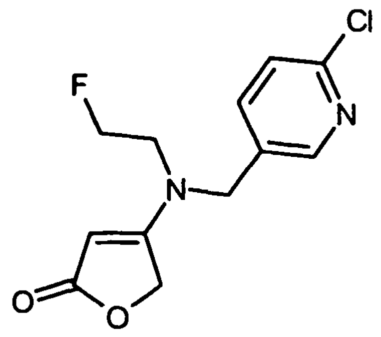

und ist bekannt aus der internationalen Patentanmeldung WO 2007/115644.

- Verbindung (I-5), 4-{[(6-Chlorpyrid-3-yl)methyl](2,2-difluorethyl)amino}furan-2(5H)-on, besitzt die Formel

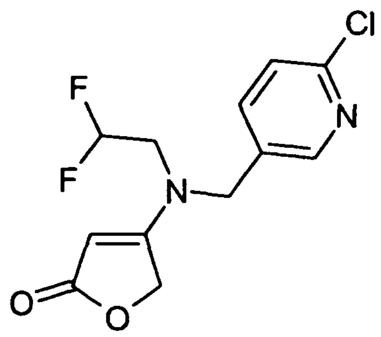

und ist bekannt aus der internationalen Patentanmeldung WO 2007/115644.

- Verbindung (1-6), 4-{[(6-Chlor-5-fluorpyrid-3-yl)methyl](methyl)amino}furan-2(5H)-on, besitzt die Formel

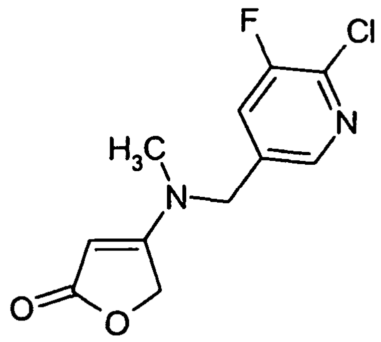

und ist bekannt aus der internationalen Patentanmeldung WO 2007/115643.

- Verbindung (I-7), 4-{[(5,6-Dichlorpyrid-3-yl)methyl](2-fluorethyl)amino}furan-2(5H)-on, besitzt die Formel

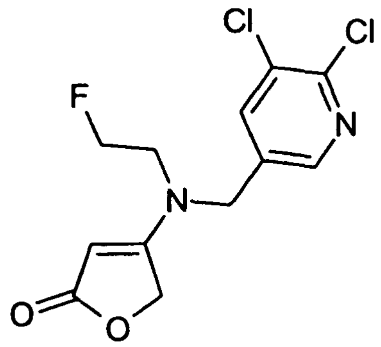

und ist bekannt aus der internationalen Patentanmeldung WO 2007/115646.

- Verbindung (I-8), 4-{[(6-Chlor-5-fluorpyrid-3-yl)methyl](cyclopropyl)amino}furan-2(5H)-on, besitzt die Formel

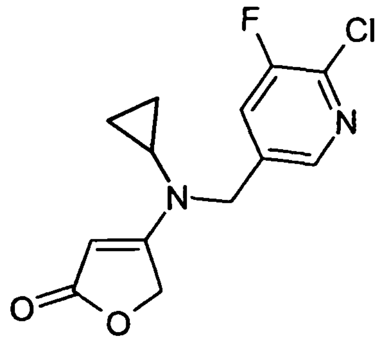

und ist bekannt aus der internationalen Patentanmeldung WO 2007/115643.

- Verbindung (1-9), 4-{[(6-Chlorpyrid-3-yl)methyl](cyclopropyl)amino}furan-2(5H)-on, besitzt die Formel

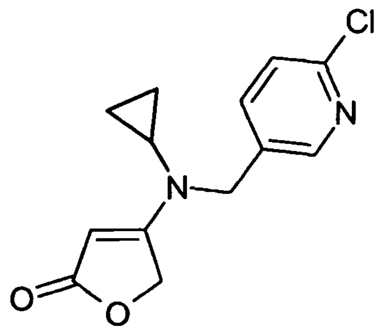

und ist bekannt aus EP 0 539 588.

- Verbindung (I-10), 4-{[(6-Chlorpyrid-3-yl)methyl](methyl)amino}furan-2(5H)-on, besitzt die Formel

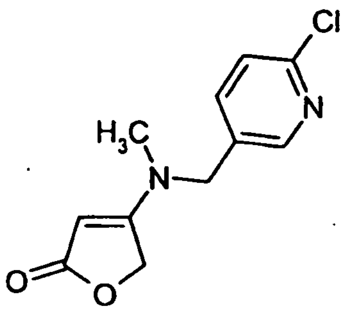

und ist bekannt aus EP 0 539 588.

Die erfindungsgemäßen Wirkstoffkombinationen enthalten mindestens eine der Verbindungen der Formel (I), in welcher A ausgewählt ist aus den Resten 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl und 5,6-Dichlor-pyrid-3-yl und $R^1$ ausgewählt ist aus den Resten Methyl, Cyclopropyl, Methoxy, 2-Fluorethyl oder 2,2-Difluor-ethyl steht, mit der Maßgabe, dass Wirkstoffkombinationen enthaltend Flubendiamide und 4-{[(6-Chlorpyrid-3-yl)methyl](methyl)amino}furan-2(5H)-on oder 4-{[(6-Chlorpyrid-3-yl)methyl](cyclopropyl) amino}furan-2(5H)-on ausgeschlossen sind, und eines der oben einzeln aufgeführten Phthalsäurediamidverbindungen.

Ganz besonders bevorzugt enthalten die erfindungsgemäßen Wirkstoffkombinationen mindestens eine Verbindung der Formel (I), die ausgewählt ist aus der Gruppe bestehend aus den Verbindungen der Formeln (I-1), (I-2), (I-3), (I-4), (I-5), (I-6), (I-7), (1-8), (I-9) und (I-10) und eines der oben einzeln aufgeführten Phthalsäurediamidverbindungen.

Damit erhält man die in Tabelle 1 aufgeführten Kombinationen, wobei jede Kombination für sich eine ganz besonders bevorzugte erfindungsgemäße Ausführungsform darstellt.

**Tabelle 1**

| Mischung enthaltend | | | |
|---|---|---|---|
| **Mischungsnummer** | **Verbindung der Formel I** | | Phthalsäurediamidverbindung |
| 1-1 | I-1 | und | IIa |
| 1-2 | I-1 | und | IIb |
| 1-3 | I-1 | und | IIc |
| 1-4 | I-1 | und | Flubendiamide |
| 2-1 | I-2 | und | IIa |
| 2-2 | I-2 | und | IIb |
| 2-3 | I-2 | und | IIc |
| 2-4 | I-2 | und | Flubendiamide |
| 3-1 | I-3 | und | IIa |
| 3-2 | I-3 | und | IIb |
| 3-3 | I-3 | und | IIc |
| 3-4 | I-3 | und | Flubendiamide |
| 4-1 | I-4 | und | IIa |
| 4-2 | I-4 | und | IIb |
| 4-3 | I-4 | und | IIc |
| 4-4 | I-4 | und | Flubendiamide |
| 5-1 | I-5 | und | IIa |
| 5-2 | I-5 | und | IIb |
| 5-3 | I-5 | und | IIc |
| 5-4 | I-5 | und | Flubendiamide |
| 6-1 | 1-6 | und | IIa |
| 6-2 | I-6 | und | IIb |
| 6-3 | I-6 | und | IIc |
| 6-4 | I-6 | und | Flubendiamide |
| 7-1 | I-7 | und | IIa |
| 7-2 | I-7 | und | IIb |
| 7-3 | I-7 | und | IIc |

(fortgesetzt)

| Mischung enthaltend | | | |
|---|---|---|---|
| Mischungsnummer | Verbindung der Formel I | | Phthalsäurediamidverbindung |
| 7-4 | I-7 | und | Flubendiamide |
| 8-1 | I-8 | und | IIa |
| 8-2 | I-8 | und | IIb |
| 8-3 | I-8 | und | IIc |
| 8-4 | I-8 | und | Flubendiamide |
| 9-1 | I-9 | und | IIa |
| 9-2 | I-9 | und | IIb |
| 9-3 | I-9 | und | IIc |
| 10-1 | I-10 | und | IIa |
| 10-2 | I-10 | und | IIb |
| 10-3 | I-10 | und | IIc |

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse den Wirkstoffe in den Wirkstoffkombinationen in einem relativ großen Bereich variiert werden. Im allgemeinen enthalten die erfindungsgemäßen Kombinationen einen Wirkstoff der Formel (I) und eines der oben einzeln aufgeführten Wirkstoffs aus der Klasse der Phthalsäurediamide in folgenden bevorzugten und besonders bevorzugten Mischungsverhältnissen:

| | |
|---|---|
| Bevorzugtes Mischungsverhältnis: | 125:1 bis 1:125 |
| Besonders bevorzugtes Mischungsverhältnis: | 25:1 bis 1:25 |

Die Mischungsverhältnisse basieren auf Gewichtsverhältnissen. Das Verhältnis ist zu verstehen als Wirkstoff der Formel (I) : Phthalsäurediamidverbindung. Weitere Mischungsverhältnisse der Verbindung der Formel (I) zu einem der oben einzeln aufgeführten Phthalsäurediamidverbindungen sind im Folgenden angegeben und nach steigender Präferenz der Mischungsverhältnisse sortiert: 95:1 bis 1:95, 95:1 bis 1:90, 95:1 bis 1:85, 95:1 bis 1:80, 95:1 bis 1:75, 95:1 bis 1:70, 95:1 bis 1:65, 95:1 bis 1:60, 95:1 bis 1:55, 95:1 bis 1:50, 95:1 bis 1:45, 95:1 bis 1:40, 95:1 bis 1:35, 95:1 bis 1:30, 95:1 bis 1:25, 95:1 bis 1:20, 95:1 bis 1:15, 95:1 bis 1:10, 95:1 bis 1:5, 95:1 bis 1:4, 95:1 bis 1:3, 95:1 bis 1:2, 90:1 bis 1:90, 90:1 bis 1:95, 90:1 bis 1:85, 90:1 bis 1:80, 90:1 bis 1:75, 90:1 bis 1:70, 90:1 bis 1:65, 90:1 bis 1:60, 90:1 bis 1:55, 90:1 bis 1:50, 90:1 bis 1:45, 90:1 bis 1:40, 90:1 bis 1:35, 90:1 bis 1:30, 90:1 bis 1:25, 90:1 bis 1:20, 90:1 bis 1:15, 90:1 bis 1:10, 90:1 bis 1:5, 90:1 bis 1:4, 90:1 bis 1:3, 90:1 bis 1:2, 85:1 bis 1:85, 85:1 bis 1:95, 85:1 bis 1:90, 85: 1 bis 1:80, 85:1 bis 1:75, 85:1 bis 1:70, 85:1 bis 1:65, 85:1 bis 1:60, 85:1 bis 1:55, 85:1 bis 1:50, 85:1 bis 1:45, 85:1 bis 1:40, 85:1 bis 1:35, 85:1 bis 1:30, 85:1 bis 1:25, 85:1 bis 1:20, 85:1 bis 1:15, 85:1 bis 1:10, 85:1 bis 1:5, 85:1 bis 1:4, 85:1 bis 1:3, 85:1 bis 1:2, 80:1 bis 1:80, 80:1 bis 1:95, 80:1 bis 1:90, 80:1 bis 1:85, 80:1 bis 1:75, 80:1 bis 1:70, 80:1 bis 1:65, 80:1 bis 1:60, 80:1 bis 1:55, 80:1 bis 1:50, 80:1 bis 1:45, 80:1 bis 1:40, 80:1 bis 1:35, 80:1 bis 1:30, 80:1 bis 1:25, 80:1 bis 1:20, 80:1 bis 1:15, 80:1 bis 1:10, 80:1 bis 1:5, 80:1 bis 1:4, 80:1 bis 1:3, 80:1 bis 1:2, 75:1 bis 1:75, 75:1 bis 1:95, 75:1 bis 1:90, 75:1 bis 1:85, 75:1 bis 1:80, 75:1 bis 1:70, 75:1 bis 1:65, 75:1 bis 1:60, 75:1 bis 1:55, 75:1 bis 1:50, 75:1 bis 1:45, 75:1 bis 1:40, 75:1 bis 1:35, 75:1 bis 1:30, 75:1 bis 1:25, 75:1 bis 1:20, 75:1 bis 1:15, 75:1 bis 1:10, 75:1 bis 1:5, 75:1 bis 1:4, 75:1 bis 1:3, 75:1 bis 1:2, 70:1 bis 1:70, 70:1 bis 1:95, 70:1 bis 1:90, 70:1 bis 1:85, 70:1 bis 1:80, 70:1 bis 1:75, 70:1 bis 1:65, 70:1 bis 1:60, 70:1 bis 1:55, 70:1 bis 1:50, 70:1 bis 1:45, 70:1 bis 1:40, 70:1 bis 1:35, 70:1 bis 1:30, 70:1 bis 1:25, 70:1 bis 1:20, 70:1 bis 1:15, 70:1 bis 1:10, 70:1 bis 1:5, 70:1 bis 1:4, 70:1 bis 1:3, 70:1 bis 1:2, 65:1 bis 1:65, 65:1 bis 1:95, 65:1 bis 1:90, 65:1 bis 1:85, 65:1 bis 1:80, 65:1 bis 1:75, 65:1 bis 1:70, 65:1 bis 1:60, 65:1 bis 1:55, 65:1 bis 1:50, 65:1 bis 1:45, 65:1 bis 1:40, 65:1 bis 1:35, 65:1 bis 1:30, 65:1 bis 1:25, 65:1 bis 1:20, 65:1 bis 1:15, 65:1 bis 1:10, 65:1 bis 1:5, 65:1 bis 1:4, 65:1 bis 1:3, 65:1 bis 1:2, 60:1 bis 1:60, 60:1 bis 1:95, 60:1 bis 1:90, 60: 1 bis 1:85, 60:1 bis 1:80, 60:1 bis 1:75, 60:1 bis 1:70, 60:1 bis 1:65, 60:1 bis 1:55, 60:1 bis 1:50, 60:1 bis 1:45, 60:1 bis 1:40, 60:1 bis 1:35, 60:1 bis 1:30, 60:1 bis 1:25, 60:1 bis 1:20, 60:1 bis 1:15, 60:1 bis 1:10, 60:1 bis 1:5, 60:1 bis 1:4, 60:1 bis 1:3, 60:1 bis 1:2, 55:1 bis 1:55, 55:1 bis 1:95, 55:1 bis 1:90, 55:1 bis 1:85, 55:1 bis 1:80, 55:1 bis 1:75, 55:1 bis 1:70, 55:1 bis 1:65, 55:1 bis 1:60, 55:1 bis 1:50, 55:1 bis 1:45, 55:1 bis 1:40, 55:1 bis 1:35, 55:1 bis 1:30, 55:1 bis 1:25, 55:1 bis 1:20, 55:1 bis 1:15, 55:1 bis 1:10, 55:1 bis 1:5, 55:1 bis 1:4, 55:1 bis 1:3, 55:1 bis 1:2, 50:1 bis 1:95, 50:1 bis

1:90, 50:1 bis 1:85, 50:1 bis 1:80, 50:1 bis 1:75, 50:1 bis 1:70, 50:1 bis 1:65, 50:1 bis 1:60, 50:1 bis 1:55, 50:1 bis 1:45, 50:1 bis 1:40, 50:1 bis 1:35, 50:1 bis 1:30, 50:1 bis 1:25, 50:1 bis 1:20, 50:1 bis 1:15, 50:1 bis 1:10, 50:1 bis 1:5, 50:1 bis 1:4, 50:1 bis 1:3, 50:1 bis 1:2, 45:1 bis 1:45, 45:1 bis 1:95, 45:1 bis 1:90, 45:1 bis 1:85, 45:1 bis 1:80, 45:1 bis 1:75, 45:1 bis 1:70, 45:1 bis 1:65, 45:1 bis 1:60, 45:1 bis 1:55, 45:1 bis 1:50, 45:1 bis 1:40, 45:1 bis 1:35, 45:1 bis 1:30, 45:1 bis 1:25, 45:1 bis 1:20, 45:1 bis 1:15, 45:1 bis 1:10, 45:1 bis 1:5, 45:1 bis 1:4, 45:1 bis 1:3, 45:1 bis 1:2, 40:1 bis 1:40, 40:1 bis 1:95, 40:1 bis 1:90, 40:1 bis 1:85, 40:1 bis 1:80, 40:1 bis 1:75, 40:1 bis 1:70, 40:1 bis 1:65, 40:1 bis 1:60, 40:1 bis 1:55, 40:1 bis 1:50, 40:1 bis 1:45, 40:1 bis 1:35, 40:1 bis 1:30, 40:1 bis 1:25, 40:1 bis 1:20, 40:1 bis 1:15, 40:1 bis 1:10, 40:1 bis 1:5, 40:1 bis 1:4, 40:1 bis 1:3, 40:1 bis 1:2, 35:1 bis 1:35, 35:1 bis 1:95, 35:1 bis 1:90, 35:1 bis 1:85, 35: 1 bis 1:80, 35:1 bis 1:75, 35:1 bis 1:70, 35:1 bis 1:65, 35:1 bis 1:60, 35:1 bis 1:55, 35:1 bis 1:50, 35:1 bis 1:45, 35:1 bis 1:40, 35:1 bis 1:30, 35:1 bis 1:25, 35:1 bis 1:20, 35:1 bis 1:15, 35:1 bis 1:10, 35:1 bis 1:5, 35:1 bis 1:4, 35:1 bis 1:3, 35: 1 bis 1:2, 30:1 bis 1:30, 30:1 bis 1:95, 30:1 bis 1:90, 30:1 bis 1:85, 30:1 bis 1:80, 30:1 bis 1:75, 30:1 bis 1:70, 30:1 bis 1:65, 30:1 bis 1:60, 30:1 bis 1:55, 30:1 bis 1:50, 30:1 bis 1:45, 30:1 bis 1:40, 30:1 bis 1:35, 30:1 bis 1:25, 30:1 bis 1:20, 30:1 bis 1:15, 30:1 bis 1:10, 30:1 bis 1:5, 30:1 bis 1:4, 30:1 bis 1:3, 30:1 bis 1:2, 25:1 bis 1:25, 25:1 bis 1:95, 25:1 bis 1:90, 25:1 bis 1:85, 25:1 bis 1:80, 25:1 bis 1:75, 25:1 bis 1:70, 25:1 bis 1:65, 25:1 bis 1:60, 25:1 bis 1:55, 25:1 bis 1:50, 25:1 bis 1:45, 25:1 bis 1:40, 25:1 bis 1:35, 25:1 bis 1:30, 25:1 bis 1:20, 25:1 bis 1:15, 25:1 bis 1:10, 25:1 bis 1:5, 25:1 bis 1:4, 25:1 bis 1:3, 25:1 bis 1:2, 20:1 bis 1:95, 20:1 bis 1:90, 20:1 bis 1:85, 20:1 bis 1:80, 20:1 bis 1:75, 20:1 bis 1:70, 20:1 bis 1:65, 20:1 bis 1:60, 20:1 bis 1:55, 20:1 bis 1:50, 20:1 bis 1:45, 20:1 bis 1:40, 20:1 bis 1:35, 20:1 bis 1:30, 20:1 bis 1:25, 20:1 bis 1:15, 20:1 bis 1:10, 20:1 bis 1:5, 20:1 bis 1:4, 20:1 bis 1:3, 20:1 bis 1:2, 15:1 bis 1:15, 15:1 bis 1:95, 15:1 bis 1:90, 15:1 bis 1:85, 15:1 bis 1:80, 15:1 bis 1:75, 15:1 bis 1:70, 15:1 bis 1:65, 15:1 bis 1:60, 15:1 bis 1:55, 15:1 bis 1:50, 15:1 bis 1:45, 15:1 bis 1:40, 15:1 bis 1:35, 15:1 bis 1:30, 15:1 bis 1:25, 15:1 bis 1:20, 15:1 bis 1:10, 15:1 bis 1:5, 15:1 bis 1:4, 15:1 bis 1:3, 15:1 bis 1:2, 10:1 bis 1:10, 10:1 bis 1:95, 10:1 bis 1:90, 10:1 bis 1:85, 10:1 bis 1:80, 10: 1 bis 1:75, 10:1 bis 1:70, 10:1 bis 1:65, 10:1 bis 1:60, 10:1 bis 1:55, 10:1 bis 1:50, 10:1 bis 1:45, 10:1 bis 1:40, 10:1 bis 1:35, 10:1 bis 1:30, 10:1 bis 1:25, 10:1 bis 1:20, 10:1 bis 1:15, 10:1 bis 1:5, 10:1 bis 1:4, 10:1 bis 1:3, 10:1 bis 1:2, 5:1 bis 1:5, 5:1 bis 1:95, 5:1 bis 1:90, 5:1 bis 1:85, 5:1 bis 1:80, 5:1 bis 1:75, 5:1 bis 1:70, 5:1 bis 1:65, 5:1 bis 1:60, 5:1 bis 1:55, 5:1 bis 1:50, 5:1 bis 1:45, 5:1 bis 1:40, 5:1 bis 1:35, 5:1 bis 1:30, 5:1 bis 1:25, 5:1 bis 1:20, 5:1 bis 1:15, 5:1 bis 1: 10, 5:1 bis 1:4, 5:1 bis 1:3, 5:1 bis 1:2, 4:1 bis 1:4, 4:1 bis 1:95, 4:1 bis 1:90, 4:1 bis 1:85, 4:1 bis 1:80, 4:1 bis 1:75, 4: 1 bis 1:70, 4:1 bis 1:65, 4:1 bis 1:60, 4:1 bis 1:55, 4:1 bis 1:50, 4:1 bis 1:45, 4:1 bis 1:40, 4:1 bis 1:35, 4:1 bis 1:30, 4:1 bis 1:25, 4:1 bis 1:20, 4:1 bis 1:15, 4:1 bis 1:10, 4:1 bis 1: 5, 4:1 bis 1:3, 4:1 bis 1:2, 3:1 bis 1:3, 3:1 bis 1:95, 3:1 bis 1: 90, 3:1 bis 1:85, 3:1 bis 1:80, 3:1 bis 1:75, 3:1 bis 1:70, 3:1 bis 1:65, 3:1 bis 1:60, 3:1 bis 1:55, 3:1 bis 1:50, 3:1 bis 1: 45, 3:1 bis 1:40, 3:1 bis 1:35, 3:1 bis 1:30, 3:1 bis 1:25, 3:1 bis 1:20, 3:1 bis 1:15, 3:1 bis 1:10, 3:1 bis 1: 5, 3:1 bis 1:4, 3:1 bis 1:2, 2:1 bis 1:2, 2:1 bis 1:95, 2:1 bis 1:90, 2:1 bis 1:85, 2:1 bis 1:80, 2:1 bis 1:75, 2:1 bis 1:70, 2:1 bis 1:65, 2:1 bis 1:60, 2:1 bis 1:55, 2:1 bis 1:50, 2:1 bis 1:45, 2:1 bis 1:40, 2:1 bis 1:35, 2:1 bis 1:30, 2:1 bis 1:25, 2:1 bis 1:20, 2:1 bis 1:15, 2:1 bis 1:10, 2:1 bis 1: 5, 2:1 bis 1:4, 2:1 bis 1:3.

Die Verbindungen der Formel (I) mit wenigstens einem basischen Zentrum sind dazu in der Lage, beispielsweise Säureadditionssalze zu bilden, z.B. mit starken anorganischen Säuren wie Mineralsäuren, z.B. Perchlorsäure, Schwefelsäure, Salpetersäure, salpetriger Säure, einer Phosphorsäure oder einer Halogenwasserstoffsäure, mit starken organischen Carbonsäuren wie unsubstituierten oder substituierten, z.B. halogensubstituierten, $C_1$-$C_4$-Alkancarbonsäuren, z.B. Essigsäure, gesättigten oder ungesättigten Dicarbonsäuren, z.B. Oxalsäure, Malonsäure, Bernsteinsäure, Maleinsäure, Fumarsäure und Phthalsäure, Hydroxycarbonsäuren, z.B. Ascorbinsäure, Milchsäure, Äpfelsäure, Weinsäure und Citronensäure, oder Benzoesäure, oder mit organischen Sulfonsäuren wie unsubstituierten oder substituierten, z.B. halogensubstituierten, $C_1$-$C_4$-Alkan- oder Arylsulfonsäuren, z.B. Methan- oder p-Toluolsulfonsäure. Die Verbindungen der Formel (I) mit wenigstens einer sauren Gruppe sind dazu in der Lage, zum Beispiel Salze mit Basen zu bilden, z.B. Metallsalze wie Alkali- oder Erdalkalisalze, z.B. Natrium-, Kalium- oder Magnesiumsalze, oder Salze mit Ammoniak oder einem organischen Amin wie Morpholin, Piperidin, Pyrrolidin, einem niederen Mono-, Di- oder Trialkylamin, z.B. Ethyl-, Diethyl-, Triethyl- oder Dimethylpropylamin, oder einem niederen Mono-, Di- oder Trihydroxyalkylamin, z.B. Mono-, Di- oder Triethanolamin. Darüber hinaus können gegebenenfalls entsprechende innere Salze gebildet werden. Im Rahmen der Erfindung sind agrochemisch vorteilhafte Salze bevorzugt. Angesichts der engen Beziehung zwischen den Verbindungen der Formel (I) in freier Form und in Form ihrer Salze sollte oben und im folgenden jeder Verweis auf die freien Verbindungen der Formel (I) oder auf ihre Salze so verstanden werden, dass auch die entsprechenden Salze bzw. die freien Verbindungen der Formel (I) eingeschlossen sind, wenn dies angebracht und zweckmäßig ist. Dies trifft entsprechend auch auf mögliche Tautomere der Verbindungen der Formel (I) bzw. der Verbindungen aus der Klasse der Phthalsäurediamide und auf ihre Salze zu.

Im Rahmen der vorliegenden Erfindung steht der Begriff "Wirkstoffkombination" für verschiedene Kombinationen von erfindungsgemäßen Verbindungen der Formel (I) und erfindungsgemäßen Wirkstoffe aus der Klasse der Phthalsäurediamide, z.B. in Form einer einzelnen Fertigmischung ("Ready-Mix"), in einer kombinierten Spraymischung, die zusammengesetzt ist aus getrennten Formulierungen der einzelnen Wirkstoffe, z.B. einer Tankmischung ("Tank-Mix") oder in einer kombinierten Verwendung der einzelnen Wirkstoffe, wenn diese sequentiell appliziert werden, z.B. nacheinander innerhalb eines angemessen kurzen Zeitraums, z.B. wenigen Stunden oder Tagen. Gemäß einer bevorzugten

Ausführungsform ist die Reihenfolge der Applikation der Verbindungen der Formel (I) und erfindungsgemäßen Wirkstoffe aus der Klasse der Phthalsäurediamide für die Ausführung der vorliegenden Erfindung nicht entscheidend.

Beim Einsatz der erfindungsgemäßen Wirkstoffkombinationen als Insektizide und Akarizide können die Aufwandmengen je nach Applikationsart innerhalb eines größeren Bereiches variiert werden. Die Aufwandmenge der erfindungsgemäßen Wirkstoffkombinationen beträgt bei der Behandlung von Pflanzenteilen, z.B. Blättern von 0,1 bis 10.000 g/ha, bevorzugt von 10 bis 1.000 g/ha, besonders bevorzugt von 50 bis 300g/ha (bei Anwendung durch Gießen oder Tropfen kann die Aufwandmenge sogar verringert werden, vor allem wenn inerte Substrate wie Steinwolle oder Perlit verwendet werden); bei der Saatgutbehandlung von 2 bis 200 g pro 100 kg Saatgut, bevorzugt von 3 bis 150 g pro 100 kg Saatgut, besonders bevorzugt von 2,5 bis 25 g pro 100 kg Saatgut, ganz besonders bevorzugt von 2,5 bis 12,5 g pro 100 kg Saatgut; bei der Bodenbehandlung von 0,1 bis 10.000 g/ha, bevorzugt von 1 bis 5.000 g/ha.

Diese Aufwandmengen seien nur beispielhaft und nicht limitierend im Sinne der Erfindung genannt.

Die erfindungsgemäßen Wirkstoffkombinationen können eingesetzt werden, um Pflanzen innerhalb eines gewissen Zeitraumes nach der Behandlung gegen den Befall durch die genannten tierischen Schädlinge zu schützen. Der Zeitraum, innerhalb dessen Schutz herbeigeführt wird, erstreckt sich im Allgemeinen auf 1 bis 28 Tage, bevorzugt auf 1 bis 14 Tage, besonders bevorzugt auf 1 bis 10 Tage, ganz besonders bevorzugt auf 1 bis 7 Tage nach der Behandlung der Pflanzen mit den Wirkstoffen bzw. auf bis zu 200 Tage nach einer Saatgutbehandlung.

Die erfindungsgemäßen Wirkstoffkombinationen eignen sich bei guter Pflanzenverträglichkeit, günstiger Warmblütertoxizität und guter Umweltverträglichkeit zum Schutz von Pflanzen und Pflanzenorganen, zur Steigerung der Ernteerträge, Verbesserung der Qualität des Erntegutes und zur Bekämpfung von tierischen Schädlingen, insbesondere Insekten, Spinnentieren, Helminthen, Nematoden und Mollusken, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie können vorzugsweise als Pflanzenschutzmittel eingesetzt werden. Sie sind gegen normal sensible und resistente Arten sowie gegen alle oder einzelne Entwicklungsstadien wirksam. Zu den oben erwähnten Schädlingen gehören:

Aus der Ordnung der Anoplura (Phthiraptera) z.B. Damalinia spp., Haematopinus spp., Linognathus spp., Pediculus spp., Trichodectes spp.

Aus der Klasse der Arachnida z.B. Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva z.B. Dreissena spp.

Aus der Ordnung der Chilopoda z.B. Geophilus spp., Scutigera spp.

Aus der Ordnung der Coleoptera z.B. Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Stemechus spp., Symphyletes spp., Tenebrio molitor, Tribolium spp., Trogoderma spp., Tychius spp., Xylotrechus spp., Zabrus spp.

Aus der Ordnung der Collembola z.B. Onychiurus armatus.

Aus der Ordnung der Dermaptera z.B. Forficula auricularia.

Aus der Ordnung der Diplopoda z.B. Blaniulus guttulatus.

Aus der Ordnung der Diptera z.B. Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp.. Lucilia spp., Musca spp., Nezara spp., Oestrus spp., Oscinella frit, Pegomyia hyoscyani, Phorbia spp., Stomoxys spp., Tabanus spp., Tannia spp., Tipula paludosa, Wohlfahrtia spp.

Aus der Klasse der Gastropoda z.B. Arion spp., Biomphalaria spp., Bulinus spp., Deroceras spp., Galba spp., Lymnaea spp., Oncomelania spp., Succinea spp.

Aus der Klasse der Helminthen z.B. Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp, Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin lassen sich Protozoen, wie Eimeria, bekämpfen.

Aus der Ordnung der Heteroptera z.B. Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera z.B. Acyrthosipon spp., Aeneolamia spp., Agonoscena spp., A-leurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera z.B. Diprion spp., Hoplocampa spp., Lasius spp., Monomorium pharaonis, Vespa spp.

Aus der Ordnung der Isopoda z.B. Armadillidium vulgare, Oniscus asellus, Porcellio scaber.

Aus der Ordnung der Isoptera z.B. Reticulitermes spp., Odontotermes spp.

Aus der Ordnung der Lepidoptera z.B. Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Spodoptera spp., Thermesia gemmatalis, Tinea pellionella, Tineola bisselliella, Tortrix viridana, Trichoplusia spp.

Aus der Ordnung der Orthoptera z.B. Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera z.B. Ceratophyllus spp., Xenopsylla cheopis.

Aus der Ordnung der Symphyla z.B. Scutigerella immaculata.

Aus der Ordnung der Thysanoptera z.B. Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura z.B. Lepisma saccharina.

Zu den pflanzenparasitären Nematoden gehören z.B. Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

Die erfindungsgemäßen Wirkstoffkombinationen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Virizide (einschließlich Mittel gegen Viroide) oder als Mittel gegen MLO (Mycoplasma-like-organism) und RLO (Rickettsia-like-organism) verwendet werden.

Die Wirkstoffe können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösemittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie N-Alkylpyrrolidone) und Lactone, der Sulfone und Sulfoxide (wie Dimethylsulfoxid).

Im Falle der Benutzung von Wasser als Streckmittel können z.B. auch organische Lösemittel als Hilfslösungsmittel verwendet werden. Als flüssige Lösemittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Erfindungsgemäß bedeutet Trägerstoff eine natürliche oder synthetische, organische oder anorganische Substanz, welcher fest oder flüssig sein kann, mit welchen die Wirkstoffe zur besseren Anwendbarkeit, insbesondere zum Aufbringen auf Pflanzen oder Pflanzenteile oder Saatgut, gemischt oder verbunden sind. Der feste oder flüssige Trägerstoff ist im Allgemeinen inert und sollte in der Landwirtschaft verwendbar sein.

Als feste oder flüssige Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstängeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder POP-Ether, Säure- und/oder POP- POE-Ester, Alkyl-Aryl- und/oder POP- POE-Ether, Fett- und/oder POP- POE-Addukte, POE- und/oder POP-Polyol Derivate, POE- und/oder POP-Sorbitan- oder Zucker-Addukte, Alky- oder Aryl-Sulfate, Sulfonate und Phosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäure-Derivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel.

Der Wirkstoffgehalt der aus den handelsüblichen Formulierungen bereiteten Anwendungsformen kann in weiten Bereichen variieren. Die Gesamtwirkstoffkonzentration oder die Wirkstoffkonzentartion der Einzelwirkstoffe der Anwendungsformen liegt im Bereich von 0,00000001 bis 97 Gew.-% Wirkstoff, vorzugsweise im Bereich von 0,0000001 bis 97 Gew.-%, besonders bevorzugt im Bereich von 0,000001 bis 83 Gew.-% oder 0,000001 bis 5 Gew.-% und ganz besonders bevorzugt im Bereich von 0,0001 bis 1 Gew. %.

Die erfindungsgemäßen Wirkstoffkombinationen können in ihren handelsüblichen Formulierungen sowie in den aus diesen Formulierungen bereiteten Anwendungsformen in Mischung mit weiteren Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals vorliegen.

Auch eine Mischung mit anderen bekannten Wirkstoffen, wie Herbiziden, Düngemitteln, Wachstumsregulatoren, Safenern, Semiochemicals, oder auch mit Mitteln zur Verbesserung der Pflanzeneigenschaften ist möglich.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die erfindungsgemäßen Wirkstoffkombinationen können ferner beim Einsatz als Insektizide in ihren handelsüblichen Formulierungen sowie in den aus diesen Formulierungen bereiteten Anwendungsformen in Mischungen mit Hemmstoffen vorliegen, die einen Abbau des Wirkstoffes nach Anwendung in der Umgebung der Pflanze, auf der Oberfläche von Pflanzenteilen oder in pflanzlichen Geweben vermindern.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Früchte, Samen, Stecklinge, Knollen, Rhizome, Ableger, Saatgut, Brutzwiebeln, Absenker und Ausläufer.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Als Pflanzen, welche erfindungsgemäß behandelt werden können, seien folgende erwähnt: Baumwolle, Flachs, Weinrebe, Obst, Gemüse, wie Rosaceae sp. (beispielsweise Kernfrüchte wie Apfel und Birne, aber auch Steinfrüchte wie Aprikosen, Kirschen, Mandeln und Pfirsiche und Beerenfrüchte wie Erdbeeren), Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp. (beispielsweise Bananenbäume und - plantagen), Rubiaceae sp. (beispielsweise Kaffee), Theaceae sp., Sterculiceae sp., Rutaceae sp. (beispielsweise Zitronen, Organen und Grapefruit); Solanaceae sp. (beispielsweise Tomaten), Liliaceae sp., Asteraceae sp. (beispielsweise Salat), Umbelliferae sp., Cruciferae sp., Chenopodiaceae sp., Cucurbitaceae sp. (beispielsweise Gurke), Alliaceae sp. (beispielsweise Lauch, Zwiebel), Papilionaceae sp. (beispielsweise Erbsen); Hauptnutzpflanzen, wie Gramineae sp. (beispielsweise Mais, Rasen, Getreide wie Weizen, Roggen,

Reis, Gerste, Hafer, Hirse und Triticale), Asteraceae sp. (beispielsweise Sonnenblume), Brassicaceae sp. (beispielsweise Weißkohl, Rotkohl, Brokkoli, Blumenkohl, Rosenkohl, Pak Choi, Kohlrabi, Radieschen sowie Raps, Senf, Meerrettich und Kresse), Fabacae sp. (beispielsweise Bohne, Erdnüsse), Papilionaceae sp. (beispielsweise Sojabohne), Solanaceae sp. (beispielsweise Kartoffeln), Chenopodiaceae sp. (beispielsweise Zuckerrübe, Futterrübe, Mangold, Rote Rübe); Nutzpflanzen und Zierpflanzen in Garten und Wald; sowie jeweils genetisch modifizierte Arten dieser Pflanzen.

Insbesondere eignen sich die erfindungsgemäßen Wirkstoffkombinationen zur Behandlung von Saatgut. Bevorzugt sind dabei die vorstehend als bevorzugt oder besonders bevorzugt genannten erfindungsgemäßen Kombinationen zu nennen. So entsteht ein großer Teil des durch Schädlinge verursachten Schadens an Kulturpflanzen bereits durch den Befall des Saatguts während der Lagerung und nach dem Einbringen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von Schädlingen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von Schädlingen, indem das Saatgut mit einer erfindungsgemäßen Wirkstoffkombination behandelt wird. Das erfindungsgemäße Verfahren zum Schutz von Saatgut und keimenden Pflanzen vor dem Befall von Schädlingen umfasst ein Verfahren, in dem das Saatgut zur gleichen Zeit mit einem Wirkstoff der Formel I und einem der oben einzeln aufgeführten Phthalsäurediamidverbindungen behandelt wird. Es umfasst auch ein Verfahren, in dem das Saatgut zu unterschiedlichen Zeiten mit einem Wirkstoff der Formel I und einem der oben einzeln aufgeführten Phthalsäurediamidverbindungen behandelt wird. Die Erfindung bezieht sich ebenfalls auf die Verwendung der erfindungsgemäßen Wirkstoffkombinationen zur Behandlung von Saatgut zum Schutz des Saatguts und der daraus entstehenden Pflanze vor Schädlingen. Weiterhin bezieht sich die Erfindung auf Saatgut, welches zum Schutz vor Schädlingen mit einer erfindungsgemäßen Wirkstoffkombination behandelt wurde. Die Erfindung bezieht sich auch auf Saatgut, welches zur gleichen Zeit mit einem Wirkstoff der Formel I und einem der oben einzeln aufgeführten Phthalsäurediamidverbindungen behandelt wurde. Die Erfindung bezieht sich weiterhin auf Saatgut, welches zu unterschiedlichen Zeiten mit einem Wirkstoff der Formel I und einem der oben einzeln aufgeführten Phthalsäurediamidverbindungen behandelt wurde. Bei Saatgut, welches zu unterschiedlichen Zeiten mit einem Wirkstoff der Formel I und einem der oben einzeln aufgeführten Phthalsäurediamidverbindungen behandelt wurde, können die einzelnen Wirkstoffe des erfindungsgemäßen Mittels in unterschiedlichen Schichten auf dem Saatgut enthalten sein. Dabei können die Schichten, die einen Wirkstoff der Formel I und eines der oben einzeln aufgeführten Phthalsäurediamidverbindungen enthalten, gegebenenfalls durch eine Zwischenschicht getrennt sein. Die Erfindung bezieht sich auch auf Saatgut, bei dem ein Wirkstoff der Formel I und eines der oben einzeln aufgeführten Phthalsäurediamidverbindungen als Bestandteil einer Umhüllung oder als weitere Schicht oder weitere Schichten zusätzlich zu einer Umhüllung aufgebracht sind.

Einer der Vorteile der vorliegenden Erfindung ist es, dass aufgrund der besonderen systemischen Eigenschaften einiger der erfindungsgemäßen Wirkstoffkombinationen die Behandlung des Saatguts mit diesen Wirkstoffkombinationen nicht nur das Saatgut selbst, sondern auch die daraus hervorgehenden Pflanzen nach dem Auflaufen vor Schädlingen schützt. Auf diese Weise kann die unmittelbare Behandlung der Kultur zum Zeitpunkt der Aussaat oder kurz danach entfallen.

Ein weiterer Vorteil besteht in der synergistischen Erhöhung der insektiziden Wirksamkeit der erfindungsgemäßen Wirkstoffkombinationen gegenüber dem insektiziden Einzelwirkstoff, die über die zu erwartende Wirksamkeit der beiden einzeln angewendeten Wirkstoffe hinausgeht. Vorteilhaft ist auch die synergistische Erhöhung der fungiziden Wirksamkeit der erfindungsgemäßen Wirkstoffkombinationen gegenüber dem fungiziden Einzelwirkstoff, die über die zu erwartende Wirksamkeit des einzeln angewendeten Wirkstoffs hinausgeht. Damit wird eine Optimierung der Menge der eingesetzten Wirkstoffe ermöglicht.

Ebenso ist es als vorteilhaft anzusehen, dass die erfindungsgemäßen Wirkstoffkombinationen insbesondere auch bei transgenem Saatgut eingesetzt werden können, wobei die aus diesem Saatgut hervorgehenden Pflanzen zur Expression eines gegen Schädlinge gerichteten Proteins befähigt sind. Durch die Behandlung solchen Saatguts mit den erfindungsgemäßen Wirkstoffkombinationen können bestimmte Schädlinge bereits durch die Expression des z.B. insektiziden Proteins kontrolliert werden, und zusätzlich durch die erfindungsgemäßen Wirkstoffkombinationen vor Schäden bewahrt werden.

Die erfindungsgemäßen Wirkstoffkombinationen eignen sich zum Schutz von Saatgut jeglicher Pflanzensorte wie bereits vorstehend genannt, die in der Landwirtschaft, im Gewächshaus, in Forsten oder im Gartenbau eingesetzt wird. Insbesondere handelt es sich dabei um Saatgut von Mais, Erdnuss, Canola, Raps, Mohn, Soja, Baumwolle, Rübe (z.B. Zuckerrübe und Futterrübe), Reis, Hirse, Weizen, Gerste, Hafer, Roggen, Sonnenblume, Tabak, Kartoffeln oder Gemüse (z.B. Tomaten, Kohlgewächs). Die erfindungsgemäßen Wirkstoffkombinationen eignen sich ebenfalls zur Behandlung des Saatguts von Obstpflanzen und Gemüse wie vorstehend bereits genannt. Besondere Bedeutung kommt der Behandlung des Saatguts von Mais, Soja, Baumwolle, Weizen und Canola oder Raps zu.

Wie vorstehend bereits erwähnt, kommt auch der Behandlung von transgenem Saatgut mit einer erfindungsgemäßen Wirkstoffkombination eine besondere Bedeutung zu. Dabei handelt es sich um das Saatgut von Pflanzen, die in der Regel zumindest ein heterologes Gen enthalten, das die Expression eines Polypeptids mit insbesondere insektiziden Eigenschaften steuert. Die heterologen Gene in transgenem Saatgut können dabei aus Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das zumindest ein heterologes Gen enthält, das aus Bacillus sp. stammt und dessen Genprodukt Wirksamkeit gegen Maiszünsler und/oder Maiswurzel-Bohrer zeigt. Besonders bevorzugt handelt es sich dabei um ein heterologes Gen, das aus Bacillus thuringiensis stammt.

Im Rahmen der vorliegenden Erfindung wird die erfindungsgemäße Wirkstoffkombination alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde.

Im Allgemeinen muss bei der Behandlung des Saatguts darauf geachtet werden, dass die Menge der auf das Saatgut aufgebrachten erfindungsgemäßen Wirkstoffkombination und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffe können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutylnaphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, besonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art, auch von Saatgut transgener Pflanzen, eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden, wie beispielsweise Antisense- oder Cosuppressions-Technologie, RNA-Interferenz - RNAi - Technologie, gegebenenfalls in Kombination mit konventionellen Methoden erhalten wurden (Genetically Modified Organisms) und deren Teile behandelt. Die Begriffe "Teile" bzw. "Teile von Pflanzen" oder "Pflanzenteile" wurden oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken erzeugt wurden. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Zuckerrüben, Tomaten, Erbsen und andere Gemüsesorten, Baumwolle, Tabak, Raps, sowie Obstpflanzen (mit den Früchten Äpfel, Birnen, Zitrusfrüchten und Weintrauben) erwähnt, wobei Mais, Soja, Kartoffel, Baumwolle, Tabak und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryI-IIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren

durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid-tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid- resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft mit den erfindungsgemäßen Wirkstoffkombinationen behandelt werden. Die bei den Wirkstoffkombinationen oben angegebenen Vorzugsbereiche gelten auch für die Behandlung dieser Pflanzen. Besonders hervorgehoben sei die Pflanzenbehandlung mit den im vorliegenden Text speziell aufgeführten Wirkstoffkombinationen.

Die erfindungsgemäßen Wirkstoffkombinationen wirken nicht nur gegen Pflanzen-, Hygiene- und Vorratsschädlinge, sondern auch auf dem veterinärmedizinischen Sektor gegen tierische Parasiten (Ekto- und Endoparasiten) wie Schildzecken, Lederzecken, Räudemilben, Laufmilben, Fliegen (stechend und leckend), parasitierende Fliegenlarven, Läuse, Haarlinge, Federlinge und Flöhe. Zu diesen Parasiten gehören:

Aus der Ordnung der Anoplurida z.B. Haematopinus spp., Linognathus spp., Pediculus spp., Phtirus spp., Solenopotes spp..

Aus der Ordnung der Mallophagida und den Unterordnungen Amblycerina sowie Ischnocerina z.B. Trimenopon spp., Menopon spp., Trinoton spp., Bovicola spp., Werneckiella spp., Lepikentron spp., Damalina spp., Trichodectes spp., Felicola spp..

Aus der Ordnung Diptera und den Unterordnungen Nematocerina sowie Brachycerina z.B. Aedes spp., Anopheles spp., Culex spp., Simulium spp., Eusimulium spp., Phlebotomus spp., Lutzomyia spp., Culicoides spp., Chrysops spp., Hybomitra spp., Atylotus spp., Tabanus spp., Haematopota spp., Philipomyia spp., Braula spp., Musca spp., Hydrotaea spp., Stomoxys spp., Haematobia spp., Morellia spp., Fannia spp., Glossina spp., Calliphora spp., Lucilia spp., Chrysomyia spp., Wohlfahrtia spp., Sarcophaga spp., Oestrus spp., Hypoderma spp., Gasterophilus spp., Hippobosca spp., Lipoptena spp., Melophagus spp..

Aus der Ordnung der Siphonapterida z.B. Pulex spp., Ctenocephalides spp., Xenopsylla spp., Ceratophyllus spp..

Aus der Ordnung der Heteropterida z.B. Cimex spp., Triatoma spp., Rhodnius spp., Panstrongylus spp..

Aus der Ordnung der Blattarida z.B. Blatta orientalis, Periplaneta americana, Blattela germanica, Supella spp..

Aus der Unterklasse der Acari (Acarina) und den Ordnungen der Meta- sowie Mesostigmata z.B. Argas spp., Ornithodorus spp., Otobius spp., Ixodes spp., Amblyomma spp., Boophilus spp., Dermacentor spp., Haemophysalis spp., Hyalomma spp., Rhipicephalus spp., Dermanyssus spp., Raillietia spp., Pneumonyssus spp., Sternostoma spp., Varroa spp..

Aus der Ordnung der Actinedida (Prostigmata) und Acaridida (Astigmata) z.B. Acarapis spp., Cheyletiella spp., Ornithocheyletia spp., Myobia spp., Psorergates spp., Demodex spp., Trombicula spp., Listrophorus spp., Acarus spp., Tyrophagus spp., Caloglyphus spp., Hypodectes spp., Pterolichus spp., Psoroptes spp., Chorioptes spp., Otodectes spp., Sarcoptes spp., Notoedres spp., Knemidocoptes spp., Cytodites spp., Laminosioptes spp..

Die erfindungsgemäßen Wirkstoffkombinationen eignen sich auch zur Bekämpfung von Arthropoden, die landwirtschaftliche Nutztiere, wie z.B. Rinder, Schafe, Ziegen, Pferde, Schweine, Esel, Kamele, Büffel, Kaninchen, Hühner, Puten, Enten, Gänse, Bienen, sonstige Haustiere wie z.B. Hunde, Katzen, Stubenvögel, Aquarienfische sowie sogenannte Versuchstiere, wie z.B. Hamster, Meerschweinchen, Ratten und Mäuse befallen. Durch die Bekämpfung dieser

Arthropoden sollen Todesfälle und Leistungsminderungen (bei Fleisch, Milch, Wolle, Häuten, Eiern, Honig usw.) vermindert werden, so daß durch den Einsatz der erfindungsgemäßen Wirkstoffkombinationen eine wirtschaftlichere und einfachere Tierhaltung möglich ist.

Die Anwendung der erfindungsgemäßen Wirkstoffkombinationen geschieht im Veterinärsektor und bei der Tierhaltung in bekannter Weise durch enterale Verabreichung in Form von beispielsweise Tabletten, Kapseln, Tränken, Drenchen, Granulaten, Pasten, Boli, des feed-through-Verfahrens, von Zäpfchen, durch parenterale Verabreichung, wie zum Beispiel durch Injektionen (intramuskulär, subcutan, intravenös, intraperitonal u.a.), Implantate, durch nasale Applikation, durch dermale Anwendung in Form beispielsweise des Tauchens oder Badens (Dippen), Sprühens (Spray), Aufgießens (Pour-on und Spot-on), des Waschens, des Einpudems sowie mit Hilfe von wirkstoffhaltigen Formkörpern, wie Halsbändem, Ohrmarken, Schwanzmarken, Gliedmaßenbändem, Halftern, Markierungsvorrichtungen usw.

Bei der Anwendung für Vieh, Geflügel, Haustiere etc. kann man die Wirkstoffkombinationen als Formulierungen (beispielsweise Pulver, Emulsionen, fließfähige Mittel), die die Wirkstoffe in einer Menge von 1 bis 80 Gew.-% enthalten, direkt oder nach 100 bis 10 000-facher Verdünnung anwenden oder sie als chemisches Bad verwenden.

Außerdem wurde gefunden, daß die erfindungsgemäßen Wirkstoffkombinationen eine hohe insektizide Wirkung gegen Insekten zeigen, die technische Materialien zerstören.

Beispielhaft und vorzugsweise - ohne jedoch zu limitieren - seien die folgenden Insekten genannt:

Käfer wie Hylotrupes bajulus, Chlorophorus pilosis, Anobium punctatum, Xestobium rufovillosum, Ptilinus pecticomis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec. Tryptodendron spec. Apate monachus, Bostrychus capucins, Heterobostrychus brunneus, Sinoxylon spec. Dinoderus minutus;

Hautflügler wie Sirex juvencus, Urocerus gigas, Urocerus gigas taignus, Urocerus augur;

Termiten wie Kalotermes flavicollis, Cryptotermes brevis, Heterotermes indicola, Reticulitermes flavipes, Reticulitermes santonensis, Reticulitermes lucifugus, Mastotermes darwiniensis, Zootermopsis nevadensis, Coptotermes formosanus;

Borstenschwänze wie Lepisma saccharina.

Unter technischen Materialien sind im vorliegenden Zusammenhang nicht-lebende Materialien zu verstehen, wie vorzugsweise Kunststoffe, Klebstoffe, Leime, Papiere und Kartone, Leder, Holz, Holzverarbeitungsprodukte und Anstrichmittel.

Die anwendungsfertigen Mittel können gegebenenfalls noch weitere Insektizide und gegebenenfalls noch ein oder mehrere Fungizide enthalten.

Hinsichtlich möglicher zusätzlicher Zumischpartner sei auf die oben genannten Insektizide und Fungizide verwiesen.

Zugleich können die erfindungsgemäßen Wirkstoffkombinationen zum Schutz vor Bewuchs von Gegenständen, insbesondere von Schiffskörpern, Sieben, Netzen, Bauwerken, Kaianlagen und Signalanlagen, welche mit See- oder Brackwasser in Verbindung kommen, eingesetzt werden.

Weiter können die erfmdungsgemäßen Wirkstoffkombinationen allein oder in Kombinationen mit anderen Wirkstoffen als Antifouling-Mittel eingesetzt werden.

Die Wirkstoffkombinationen eignen sich auch zur Bekämpfung von tierischen Schädlingen im Haushalts-, Hygiene- und Vorratsschutz, insbesondere von Insekten, Spinnentieren und Milben, die in geschlossenen Räumen, wie beispielsweise Wohnungen, Fabrikhallen, Büros, Fahrzeugkabinen u.ä. vorkommen. Sie können zur Bekämpfung dieser Schädlinge allein oder in Kombination mit anderen Wirk- und Hilfsstoffen in Haushaltsinsektizid-Produkten verwendet werden. Sie sind gegen sensible und resistente Arten sowie gegen alle Entwicklungsstadien wirksam. Zu diesen Schädlingen gehören:

Aus der Ordnung der Scorpionidea z.B. Buthus occitanus.

Aus der Ordnung der Acarina z.B. Argas persicus, Argas reflexus, Bryobia ssp., Dermanyssus gallinae, Glyciphagus domesticus, Ornithodorus moubat, Rhipicephalus sanguineus, Trombicula alfreddugesi, Neutrombicula autumnalis, Dermatophagoides pteronissimus, Dermatophagoides forinae.

Aus der Ordnung der Araneae z.B. Aviculariidae, Araneidae.

Aus der Ordnung der Opiliones z.B. Pseudoscorpiones chelifer, Pseudoscorpiones cheiridium, Opiliones phalangium.

Aus der Ordnung der Isopoda z.B. Oniscus asellus, Porcellio scaber.

Aus der Ordnung der Diplopoda z.B. Blaniulus guttulatus, Polydesmus spp..

Aus der Ordnung der Chilopoda z.B. Geophilus spp..

Aus der Ordnung der Zygentoma z.B. Ctenolepisma spp., Lepisma saccharina, Lepismodes inquilinus.

Aus der Ordnung der Blattaria z.B. Blatta orientalies, Blattella germanica, Blattella asahinai, Leucophaea maderae, Panchlora spp., Parcoblatta spp., Periplaneta australasiae, Periplaneta americana, Periplaneta brunnea, Periplaneta fuliginosa, Supella longipalpa.

Aus der Ordnung der Saltatoria z.B. Acheta domesticus.

Aus der Ordnung der Dermaptera z.B. Forficula auricularia.

Aus der Ordnung der Isoptera z.B. Kalotermes spp., Reticulitermes spp.

Aus der Ordnung der Psocoptera z.B. Lepinatus spp., Liposcelis spp.

Aus der Ordnung der Coleoptera z.B. Anthrenus spp., Attagenus spp., Dermestes spp., Latheticus oryzae, Necrobia spp., Ptinus spp., Rhizopertha dominica, Sitophilus granarius, Sitophilus oryzae, Sitophilus zeamais, Stegobium paniceum.

Aus der Ordnung der Diptera z.B. Aedes aegypti, Aedes albopictus, Aedes taeniorhynchus, Anopheles spp., Calliphora erythrocephala, Chrysozona pluvialis, Culex quinquefasciatus, Culex pipiens, Culex tarsalis, Drosophila spp., Fannia canicularis, Musca domestica, Phlebotomus spp., Sarcophaga carnaria, Simulium spp., Stomoxys calcitrans, Tipula paludosa.

Aus der Ordnung der Lepidoptera z.B. Achroia grisella, Galleria mellonella, Plodia interpunctella, Tinea cloacella, Tinea pellionella, Tineola bisselliella.

Aus der Ordnung der Siphonaptera z.B. Ctenocephalides canis, Ctenocephalides felis, Pulex irritans, Tunga penetrans, Xenopsylla cheopis.

Aus der Ordnung der Hymenoptera z.B. Camponotus herculeanus, Lasius fuliginosus, Lasius niger, Lasius umbratus, Monomorium pharaonis, Paravespula spp., Tetramorium caespitum.

Aus der Ordnung der Anoplura z.B. Pediculus humanus capitis, Pediculus humanus corporis, Pemphigus spp., Phylloera vastatrix, Phthirus pubis.

Aus der Ordnung der Heteroptera z.B. Cimex hemipterus, Cimex lectularius, Rhodinus prolixus, Triatoma infestans.

Die Anwendung im Bereich der Haushaltsinsektizide erfolgt allein oder in Kombination mit anderen geeigneten Wirkstoffen wie Phosphorsäureestem, Carbamaten, Pyrethroiden, Neonicotinoiden, Wachstumsregulatoren oder Wirkstoffen aus anderen bekannten Insektizidklassen.

Die Anwendung erfolgt in Aerosolen, drucklosen Sprühmitteln, z.B. Pump- und Zerstäubersprays, Nebelautomaten, Foggern, Schäumen, Gelen, Verdampferprodukten mit Verdampferplättchen aus Cellulose oder Kunststoff, Flüssigverdampfern, Gel- und Membranverdampfem, propellergetriebenen Verdampfern, energielosen bzw. passiven Verdampfungssystemen, Mottenpapieren, Mottensäckchen und Mottengelen, als Granulate oder Stäube, in Streuködern oder Köderstationen.

Die gute insektizide und akarizide Wirkung der erfindungsgemäßen Wirkstoffkombinationen geht aus den nachfolgenden Beispielen hervor. Während die einzelnen Wirkstoffe in der Wirkung Schwächen aufweisen, zeigen die Kombinationen eine Wirkung, die über eine einfache Wirkungssummierung hinausgeht.

Ein synergistischer Effekt liegt bei Insektiziden und Akariziden immer dann vor, wenn die Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby, Weeds 15 (1967), 20-22 wie folgt berechnet werden:

Wenn

X den Abtötungsgrad, ausgedrückt in % der unbehandelten Kontrolle, beim Einsatz des Wirkstoffes A in einer Aufwandmenge von m g/ha oder in einer Konzentration von m ppm bedeutet,

Y den Abtötungsgrad, ausgedrückt in % der unbehandelten Kontrolle, beim Einsatz des Wirkstoffes B in einer Aufwandmenge von n g/ha oder in einer Konzentration von n ppm bedeutet und

E den Abtötungsgrad, ausgedrückt in % der unbehandelten Kontrolle, beim Einsatz der Wirkstoffe A und B in Aufwandmengen von m und n g/ha oder in einer Konzentration von m und n ppm bedeutet,

dann ist

$$E = X + Y - \frac{X \cdot Y}{100}$$

Ist der tatsächliche insektizide oder akarizide Abtötungsgrad größer als berechnet, so ist die Kombination in ihrer Abtötung überadditiv, d.h. es liegt ein synergistischer Effekt vor. In diesem Fall muss der tatsächlich beobachtete Abtötungsgrad größer sein als der aus der oben angeführten Formel errechnete Wert für den erwarteten Abtötungsgrad (E).

**Beispiel A1 - Myzus persicae -Test**

| | |
|---|---|
| Lösungsmittel: | 78 Gewichtsteile Aceton<br>1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea), die stark von der Grünen Pfirsichblattlaus (Myzus persicae) befallen sind, werden durch Spritzen mit der Wirkstoffzubereitung in der gewünschten Konzentration behandelt.

Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach oben angegebener Colby-Formel.

Bei diesem Test zeigen z. B. die folgenden erfindungsgemäßen Wirkstoffkombinationen eine synergistisch verstärkte Wirksamkeit im Vergleich zu den einzeln angewendeten Wirkstoffen:

**Tabelle A1 - Myzus persicae - Test**

| Wirkstoff | Konzentration in g/ha | Abtötung in % nach 1 Tag | |
|---|---|---|---|
| Verbindung I-4 | 4 | 30 | |
| Verbindung 1-6 | 0,16 | 30 | |
| Verbindung IIb | 0,8 | 0 | |
| Flubendiamide | 0,16 | 0 | |
| | | gef.* | ber.** |
| Verbindung I-4 + Verbindung IIb (5 : 1) | 4+0,8 | 50 | 30 |

(fortgesetzt)

| Wirkstoff | Konzentration in g/ha | Abtötung in % nach 1 Tag | |
|---|---|---|---|
| | | gef.* | ber.** |
| Verbindung I-6 + Flubendiamid (1 : 1) | 0,16 + 0,16 | 70 | 30 |
| *gef.=gefundeneWirkung; ** ber. = nach der Colby-Formel berechnete Wirkung | | | |

**Beispiel A2 - Myzus persicae -Test**

| | | |
|---|---|---|
| Lösungsmittel: | 7 | Gewichtsteile Dimethylformamid |
| Emulgator: | 2 | Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea), die stark von der Grünen Pfirsichblattlaus (Myzus persicae) befallen sind, werden durch Tauchen in die Wirkstoffzubereitung der gewünschten Konzentration behandelt.
Nach der gewünschten Zeit wird die Abtötung in % bestimmt. Dabei bedeutet 100 %, dass alle Blattläuse abgetötet wurden; 0 % bedeutet, dass keine Blattläuse abgetötet wurden. Die ermittelten Abtötungswerte verrechnet man nach oben angegebener Colby-Formel.
Bei diesem Test zeigt die folgende erfindungsgemäße Wirkstoffkombination eine synergistisch verstärkte Wirksamkeit im Vergleich zu den einzeln angewendeten Wirkstoffen:

**Tabelle A2 - Myzus persicae - Test**

| Wirkstoff | Konzentration in ppm | Abtötung in % nach 1 Tag | |
|---|---|---|---|
| Verbindung I-10 | 0,8 | 45 | |
| Verbindung IIb | 100 | 10 | |
| Verbindung I-10 + Verbindung IIb (1 : 125) | | gef.* | ber.** |
| | 0,8 + 100 | 75 | 50,5 |
| *gef.=gefundeneWirkung; ** ber. = nach der Colby-Formel berechnete Wirkung | | | |

**Beispiel B - Phaedon cochleariae - Larven -Test**

| | |
|---|---|
| Lösungsmittel: | 78 Gewichtsteile Aceton<br>1,5 Gewichtsteile Dimethylformamid |
| Emulgator: | 0,5 Gewichtsteile Alkylarylpolyglykolether |

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.
Kohlblätter (Brassica oleracea) werden durch Spritzen mit der Wirkstoffzubereitung in der gewünschten Konzentration behandelt und mit Larven des Meerrettichblattkäfers (Phaedon cochleariae) besetzt, solange die Blätter noch feucht sind.
Nach der gewünschten Zeit wird die Abtötung in % bestimmt. Dabei bedeutet 100 %, dass alle Käferlarven abgetötet wurden; 0 % bedeutet, dass keine Käferlarven abgetötet wurden. Die ermittelten Abtötungswerte verrechnet man nach oben angegebener Colby-Formel.

Bei diesem Test zeigten die folgenden erfindungsgemäßen Wirkstoffkombinationen eine synergistisch verstärkte Wirksamkeit im Vergleich zu den einzeln angewendeten Wirkstoffen:

**Tabelle B - Phaedon cochleariae Larven - Test**

| Wirkstoff | Konzentration in g/ha | Abtötung in % nach 2 Tagen | |
|---|---|---|---|
| Verbindung 1-4 | 100 | 0 | |
| Verbindung I-6 | 100 | 0 | |
| Flubendiamide | 100 | 17 | |
| Verbindung I-4 + Flubendiamide (1 : 1) | 100 + 100 | gef.* 33 | ber.** 17 |
| Verbindung I-6 + Flubendiamide (1 : 1) | 100 + 100 | gef.* 33 | ber.** 17 |
| *gef.=gefundeneWirkung; ** ber. = nach der Colby-Formel berechnete Wirkung | | | |

**Beispiel C - Spodoptera frugiperda - Larven -Test**

Lösungsmittel: 78 Gewichtsteile Aceton
1,5 Gewichtsteile Dimethylformamid

Emulgator: 0,5 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit emulgatorhaltigem Wasser auf die gewünschte Konzentration.

Kohlblätter (Brassica oleracea) werden durch Spritzen mit der Wirkstoffzubereitung in der gewünschten Konzentration behandelt und mit Larven des Heerwurms (Spodoptera frugiperda) besetzt, solange die Blätter noch feucht sind.

Nach der gewünschten Zeit wird die Abtötung in % bestimmt. Dabei bedeutet 100 %, dass alle Raupen abgetötet wurden; 0 % bedeutet, dass keine Raupen abgetötet wurden. Die ermittelten Abtötungswerte verrechnet man nach oben angegebener Colby-Formel.

Bei diesem Test zeigen die folgenden erfindungsgemäßen Wirkstoffkombinationen eine synergistisch verstärkte Wirksamkeit im Vergleich zu den einzeln angewendeten Wirkstoffen:

**Tabelle C - Spodoptera frugiperda Larven - Test**

| Wirkstoff | Konzentration in g/ha | Abtötung in % nach 6 Tagen | |
|---|---|---|---|
| Verbindung I-4 | 4 | 0 | |
| Verbindung 1-5 | 0,8 | 0 | |
| Verbindung I-6 | 4 | 0 | |
| Verbindung IIb | 0,8<br>0,16 | 67<br>0 | |
| Flubendiamide | 4<br>0,8 | 67<br>33 | |
| Verbindung I-4 + Verbindung IIb (5:1) | 4+0,8 | gef.* 100 | ber.** 67 |
| Verbindung 1-5 + Verbindung IIb (5 : 1) | 0,8 + 0,16 | gef.* 33 | ber.** 0 |
| | | gef.* | ber.** |

(fortgesetzt)

| Wirkstoff | Konzentration in g/ha | Abtötung in % nach 6 Tagen | |
|---|---|---|---|
| Verbindung I-6 + Flubendiamide (1 : 1) | 4+4 | 83 | 67 |
| | | gef.* | ber.** |
| Verbindung 1-5 + Flubendiamide (1 : 1) | 0,8 + 0,8 | 67 | 33 |
| | | gef.* | ber.** |
| Verbindung I-6 + Flubendiamide (1 : 1) | 4+4 | 100 | 67 |
| *gef.=gefundeneWirkung; ** ber. = nach der Colby-Formel berechnete Wirkung | | | |

**Patentansprüche**

1. Wirkstoffkombinationen enthaltend mindestens eine Verbindung der Formel (1)

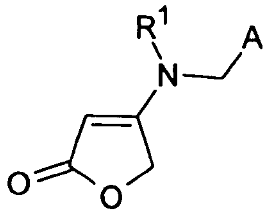

(I),

in welcher

A für den Rest 6-Fluor-pyrid-3-yl, 6-Chlor-pyrid-3-yl, 6-Brom-pyrid-3-yl, 5-Fluor-6-chlorpyrid-3-yl, 2-Chlor-1,3-thiazol-5-yl oder 5,6-Dichlor-pyrid-3-yl steht und
$R^1$ für Methyl, Cyclopropyl, Methoxy, 2-Fluorethyl oder 2,2-Difluor-ethyl steht,

und mindestens einer Phthalsäurediamidverbindung ausgewählt aus der Gruppe bestehend aus Flubendiamide, *(S)*-3-Iod-$N^1$-{2-methyl-4-[1,2,2,2-tetrafluor-1-(trifluormethyl)ethyl]phenyl}-$N^2$-(1-methyl-2-methylsulfonylethyl) phthalamid, *(S)*-3-Chlor-$N^1$-{2-methyl-4-[1,2,2,2-tetrafluor-1-(trifluormethyl)ethyl]phenyl}-$N^2$-(1-methyl-2-methylsulfonylethyl)phthalamid und *(S)*-3-Brom-$N^1$-{2-methyl-4-[1,2,2,2-tetrafluor-1-(trifluormethyl)ethyl]phenyl}-$N^2$-(1-methyl-2-methylsulfonylethyl)phthalamid
mit der Maßgabe, dass Wirkstoffkombinationen enthaltend Flubendiamide und 4-{[(6-Chlorpyrid-3-yl)methyl](methyl)amino}furan-2(5H)-on oder 4-{[(6-Chlorpyrid-3-yl)methyl](cyclopropyl)amino}furan-2(5H)-on ausgeschlossen sind.

2. Wirkstoffkombinationen gemäß Anspruch 1, **dadurch gekennzeichnet, dass** die Verbindung der Formel (I) ausgewählt ist aus der Gruppe bestehend aus den Verbindungen der Formeln

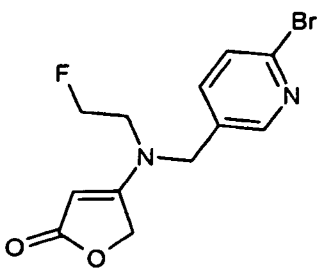

(I-1);

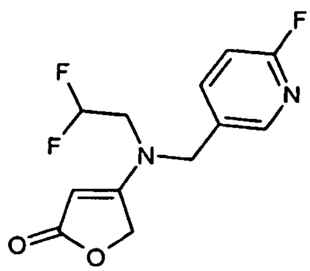

(I-2);

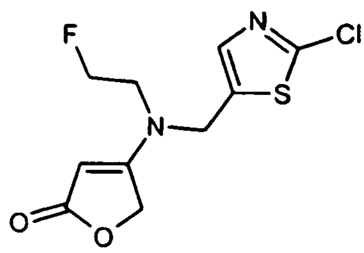

(I-3);

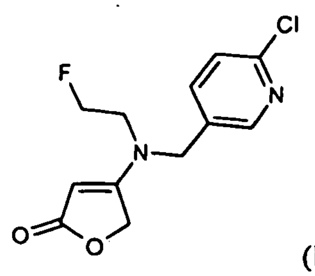

(I-4);

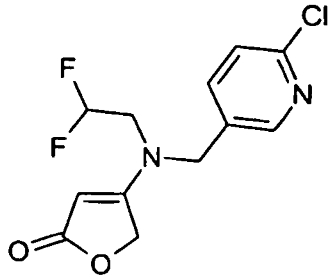

(I-5);

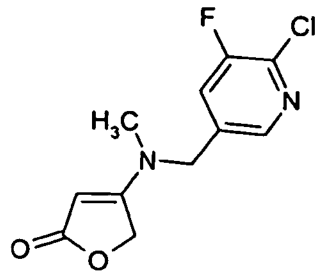

(I-6);

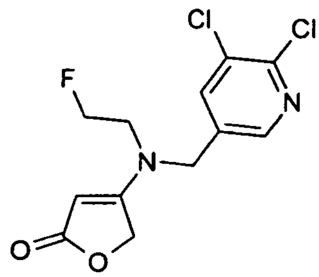

(I-7);

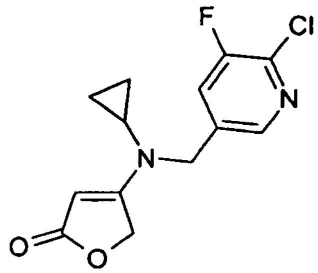

(I-8);

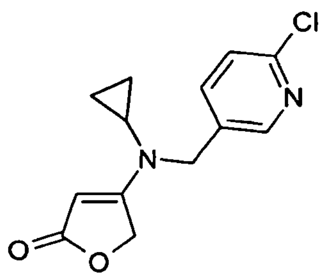

(I-9); und

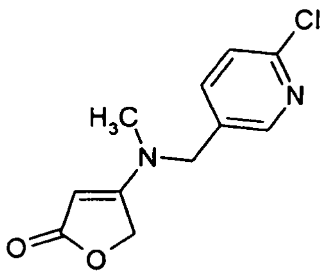

(I-10).

3. Verwendung von Wirkstoffkombinationen, wie in Anspruch 1 oder 2 definiert, zur Bekämpfung tierischer Schädlinge.

4. Verfahren zur Bekämpfung tierischer Schädlinge, **dadurch gekennzeichnet, dass** man Wirkstoffkombinationen, wie in Anspruch 1 oder 2 definiert, auf tierische Schädlinge und/oder deren Lebensraum und/oder Saatgut einwirken lässt.

5. Verfahren nach Anspruch 4, **dadurch gekennzeichnet, dass** man einen Wirkstoff der Formel I und eines der Phthalsäurediamidverbindungen zur gleichen Zeit auf Saatgut einwirken lässt.

6. Verfahren zur Herstellung insektizider und akarizider Mittel, **dadurch gekennzeichnet, dass** man Wirkstoffkombinationen, wie in Anspruch 1 oder 2 definiert, mit Streckmitteln und/oder oberflächenaktiven Stoffen vermischt.

7. Verwendung einer Wirkstoffkombination gemäß Anspruch 1 oder 2 zur Behandlung von Saatgut.

8. Verwendung von Wirkstoffkombinationen gemäß Anspruch 1 oder 2 zur Behandlung von transgenen Pflanzen.

9. Verwendung von Wirkstoffkombinationen gemäß Anspruch 1 oder 2 zur Behandlung von Saatgut transgener Pflanzen.

**10.** Saatgut mit einer Umhüllung umfassend eine Wirkstoffkombination gemäß Anspruch 1 oder 2, mit einer Umhüllung und einer weiteren Schicht umfassend eine Wirkstoffkombination gemäß Anspruch 1 oder 2, oder mit einer Umhüllung und weiteren Schichten umfassend eine Wirkstoffkombination gemäß Anspruch 1 oder 2.

**11.** Saatgut mit mehreren Schichten, wobei mindestens ein Wirkstoff der Formel (I) und mindestens eine Phthalsäurediamidverbindung wie in Anspruch 1 oder 2 beschrieben in unterschiedlichen Schichten auf das Saatgut aufgebracht sind.

## Claims

**1.** Active substance combinations containing at least one compound of the formula (I)

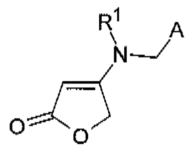

(I),

in which

A represents the radical 6-fluoropyrid-3-yl, 6-chloropyrid-3-yl, 6-bromopyrid-3-yl, 5-fluoro-6-chloropyrid-3-yl, 2-chloro-1,3-thiazol-5-yl or 5,6-dichloropyrid-3-yl and
$R^1$ represents methyl, cyclopropyl, methoxy, 2-fluoroethyl or 2,2-difluoroethyl,

and at least one phthalic diamide compound selected from the group consisting of flubendiamide, *(S)*-3-iodo-$N^1$-{2-methyl-4-[1,2,2,2-tetrafluoro-1-(trifluoromethyl)ethyl]phenyl}-$N^2$-(1-methyl-2-methylsulphonylethyl)phthalamide, *(S)*-3-chloro-$N^1$-{2-methyl-4-[1,2,2,2-tetrafluoro-1-(trifluoromethyl)ethyl]phenyl}-$N^2$-(1-methyl-2-methylsulphonylethyl)phthalamide and *(S)*-3-bromo-$N^1$-{2-methyl-4-[1,2,2,2-tetrafluoro-1-(trifluoromethyl)ethyl]phenyl}-$N^2$-(1-methyl-2-methylsulphonylethyl)phthalamide, with the proviso that active substance combinations containing flubendiamide and 4-{[(6-chloropyrid-3-yl)methyl] (methyl)amino}furan-2(5H)-one or 4-{[(6-chloropyrid-3-yl)-methyl](cyclopropyl)amino}furan-2(5H)-one are excluded.

**2.** Active substance combinations according to Claim 1, **characterized in that** the compound of the formula (I) is selected from the group consisting of the compounds of the formulae

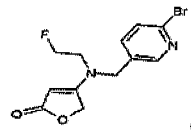 (I-1); 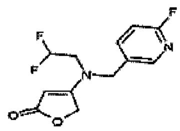 (I-2);

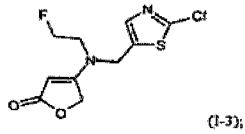 (I-3); 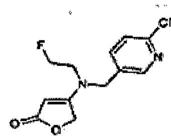 (I-4);

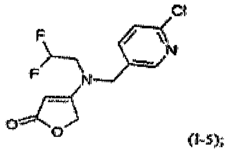 (I-5); 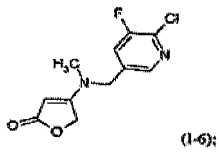 (I-6);

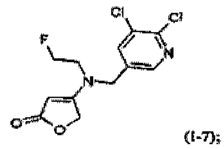 (I-7); 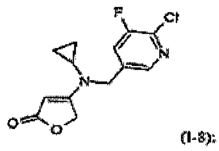 (I-8);

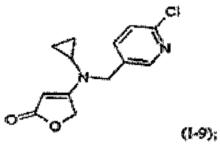 (I-9); and 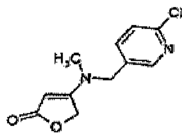 (I-10).

3. Use of active substance combinations as defined in Claim 1 or 2 for controlling animal pests.

4. Method of controlling animal pests, **characterized in that** active substance combinations as defined in Claim 1 or 2 are allowed to act on animal pests and/or their environment and/or on seed.

5. Method according to Claim 4, **characterized in that** an active substance of the formula I and one of the phthalic diamide compounds are simultaneously allowed to act on seed.

6. Method for the preparation of insecticidal and acaricidal compositions, **characterized in that** active substance combinations as defined in Claim 1 or 2 are mixed with extenders and/or surface-active substances.

7. Use of an active substance combination according to Claim 1 or 2 for the treatment of seed.

8. Use of active substance combinations according to Claim 1 or 2 for the treatment of transgenic plants.

9. Use of active substance combinations according to Claim 1 or 2 for the treatment of seed of transgenic plants.

10. Seed having a coating comprising an active substance combination according to Claim 1 or 2, having a coating and a further coat comprising an active substance combination according to Claim 1 or 2, or having a coating and further coats comprising an active substance combination according to Claim 1 or 2.

11. Seed having a plurality of coats, at least one active substance of the formula (I) and at least one phthalic diamide compound as described in Claim 1 or 2 being applied in different coats on the seed.

**Revendications**

1. Associations de substances actives contenant au moins un composé de formule (I)

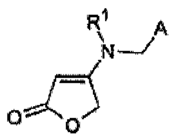
(I)

dans laquelle

A représente le radical 6-fluoro-pyrid-3-yle, 6-chloro-pyrid-3-yle, 6-bromo-pyrid-3-yle, 5-fluoro-6-chloro-pyrid-3-yle, 2-chloro-1,3-thiazol-5-yle ou 5,6-dichloro-pyrid-3-yle et
$R^1$ représente le groupe méthyle, cyclopropyle, méthoxy, 2-fluoroéthyle ou 2,2-difluoroéthyle,

et au moins une composé de type diamide d'acide phtalique, choisi dans le groupe constitu par le flubendiamide, le *(S)*-3-iodo-$N^1$-{2-m thyl-4-[1,2,2,2-tétrafluoro-1-(trifluorométhyl)éthyl]phényl}-$N^2$-(1-méthyl-2-méthylsulfonyléthyl)phtalamide, le *(S)*-3-chloro)-$N^1$-{2-méthyl-4-[1,2,2,2-t trafluoro-1-(trifluorométhyl)éthyl]phényl}-$N^2$-(1-méthyl-2-méthylsulfonyléthyl)phtalamide et le *(S)*-3-bromo-$N^1$-{2-méthyl-4-[1,2,2,2-t trafluoro-1-(trifluorométhyl)-thyl]phényl}-$N^2$-(1-méthyl-2-méthylsulfonyléthyl)-phtalamide,
tant entendu que sont exclues les associations de substances actives qui contiennent du flubendiamide et de la 4-{[(6-chloropyrid-3-yl)méthyl](méthyl)amino}-furan-2(5H)-one ou de la 4-{[(6-chloropyrid-3-yl)m thyl] (cyclopropyl) amino}furan-2(5H)-one.

2. Associations de substances actives selon la revendication 1, **caractérisées en ce que** le composé de formule (I) est choisi dans le groupe constitué par les composés de formules

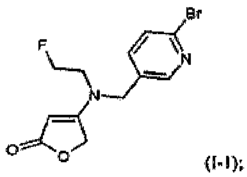
(I-1);

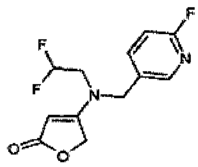
(I-2);

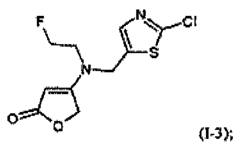
(I-3);

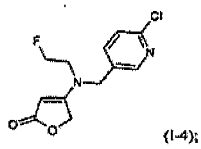
(I-4);

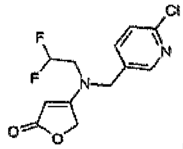
(I-5);

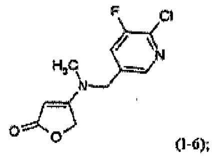
(I-6);

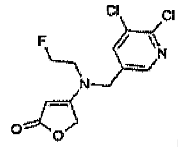
(I-7);

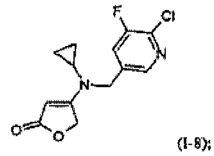
(I-8);

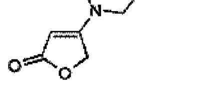
(I-9) ; et

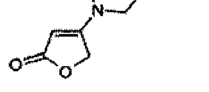
(I-10).

3. Utilisation d'associations de substances actives, telles que définies dans la revendication 1 ou 2, pour la lutte contre des ravageurs animaux.

4. Procédé pour la lutte contre des ravageurs animaux, **caractérisée en ce qu'**on fait agir sur les ravageurs animaux et/ou leur habitat et/ou des semences des associations de substances actives telles que définies dans la revendication 1 ou 2.

5. Procédé selon la revendication 4, **caractérisé en ce qu'**on fait agit sur des semences en même temps une substance active de formule I et 1 un des composés de type diamide d'acide phtalique.

6. Procédé pour la préparation de compositions insecticides et/ou acaricides, **caractérisé en ce qu'**on mélange des associations de substances actives, telles que définies dans la revendication 1 ou 2, avec des excipients et/ou des substances tensioactives.

7. Utilisation d'une association de substances actives selon la revendication 1 ou 2, pour le traitement de semences.

8. Utilisation d'associations de substances actives selon la revendication 1 ou 2, pour le traitement de plantes transgéniques.

9. Utilisation d'associations de substances actives selon la revendication 1 ou 2, pour le traitement de semences de plantes transgéniques.

10. Semence dotée d'un enrobage comprenant une association de substances actives selon la revendication 1 ou 2, comportant un enrobage et une autre couche comprenant une association de substances actives selon la revendication 1 ou 2, ou comportant un enrobage et d'autres couches comprenant une association de substances actives selon la revendication 1 ou 2.

11. Semence dotée de plusieurs couches, au moins une substance active de formule (I) et au moins un composé de type diamide d'acide phtalique tel que décrit dans la revendication 1 ou 2 tant appliqués en différentes couches sur la semence.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0539588 A
- WO 2007115644 A
- WO 2007115643 A
- WO 2007115646 A
- EP 1006107 A
- EP 1782689 A
- US 4272417 A
- US 4245432 A
- US 4808430 A
- US 5876739 A
- US 20030176428 A1
- WO 2002080675 A1
- WO 2002028186 A2


### In der Beschreibung aufgeführte Nicht-Patentliteratur


- **R. WEGLER.** Chemie der Pflanzenschutz- und Schädlingsbekämpfungsmittel. Springer Verlag, 1970, vol. 2, 401-412
- **S.R. COLBY.** *Weeds,* 1967, vol. 15, 20-22